# EUROPEAN PATENT SPECIFICATION

(11) **EP 4 625 183 B1**
(45) Date of publication and mention of the grant of the patent: **12.08.2026**
(21) Application number: 25156417.5
(22) Date of filing: 07.02.2025
(51) Int. Cl.: G06F 12/0831

(54) **APPARATUS AND METHOD FOR PERFORMANCE AND ENERGY EFFICIENT COMPUTE**
VORRICHTUNG UND VERFAHREN ZUR LEISTUNGS- UND ENERGIEEFFIZIENTEN BERECHNUNG
APPAREIL ET PROCÉDÉ DE CALCUL EFFICACE EN TERMES DE PERFORMANCE ET D'ÉNERGIE

(30) Priority: 29.03.2024 US 202463572144 P; 28.06.2024 US 202418759574
(43) Date of publication of application: 01.10.2025
(73) Proprietor: INTEL Corporation, Santa Clara, CA 95054 (US)
(72) Inventor: Bonen, Nadav, 30835 Ofer (IL); Shifer, Eran, 6940226 Tel Aviv TA (IL); Gihon, Arik, 7569996 Rishon Le Zion TA (IL); Diamand, Israel, 99850 Aderet M (IL); Mandelblat, Julius, 34454 Haifa (IL); Polishuk, Leon, 3467701 Haifa (IL)
(74) Representative: Samson & Partner Patentanwälte mbB

(56) References cited:
- WO-A1-2018/049010
- US-A1- 2016 062 890
- US-B1- 10 657 055

## Description

### BACKGROUND

### Field of the Invention

The embodiments of the invention relate generally to the field of computer processors. More particularly, the embodiments relate to an apparatus and method for performance and energy efficient compute.

### Description of the Related Art

With the advent of hybrid processors running on shrink wrap operating systems, there is a need for the operating system to understand the capabilities of the different processor cores in the system. On Intel platforms, Intel Thread Director technology provides this function, providing a means for the operating system to use the optimal core for a given task, without requiring the operating system to understand the underlying architecture.

Products with a large number of compute IPs may encapsulate those IPs in modules, with all IPs in a module sharing a common connection to a fabric and the rest of the SOC. Because the power cost of that shared logic may be largely independent of the number of active IPs in that module, there is often a power and performance tradeoff associated with how workloads that require the use of many of those compute IPs are scheduled across those modules. For example, some types of workloads might benefit when all work is scheduled on a single module, while other types of workloads might benefit from having the work scheduled across multiple modules.

In some products, it may be desirable to design and integrate compute modules that have very different power and performance capabilities. For example, a product might include modules that have very high performance capability, but maybe at the cost of lower energy efficiency. Other modules might be targeted at having higher energy efficiency capability, but with a tradeoff of providing lower performance capability. In such a design, this "low power island" module might provide great energy efficiency for work that can be contained on that module, but only for work that can be fully contained on that module.

In a general purpose system, the software scheduling the work generally doesn't understand, or what to understand, these lower level implementation details - the software would like to be able to use a common scheduling approach without needing to concern itself with these product specific details.
The document US 10 657 055 B1 describes a technique for managing snoop operations. An apparatus has an interface for receiving access requests from any of N master devices that have associated cache storage, each access request specifying a memory address within memory associated with the apparatus. Snoop filter storage is provided that has a plurality of snoop filter entries, where each snoop filter entry identifies a memory portion and snoop control information indicative of the master devices that have accessed that memory portion. When an access request received at the interface specifies a memory address that is within the memory portion associated with a snoop filter entry, snoop control circuitry uses the snoop control information in that snoop filter entry to determine which master devices to subject to a snoop operation. The snoop control circuitry maintains master indication data used to identify a first subset of the plurality of master devices whose accesses to the memory are to be precisely tracked within the snoop filter storage. The first subset comprises up to M master devices, where M is less than N. Each snoop filter entry has a precise tracking field and an imprecise tracking field. When multiple master devices have accessed the memory portion associated with a snoop filter entry, then the precise tracking field is used to precisely identify each master device of those multiple master devices that is within the first subset. When the multiple master devices includes at least one master device that is not in the first subset, then a generic indication is set in the imprecise tracking field.
Further related art is known from the document WO 2018/049010 A1 and the document US 2016/062860 A1.

### Summary

The present invention provides a processor package, a method and a machine-readable medium, as defined by the independent claims. Further developments and/or variants are defined by the dependent claims, respectively.

### BRIEF DESCRIPTION OF THE DRAWINGS

Various examples in accordance with the present disclosure will be described with reference to the drawings, in which:
FIG. 1 illustrates a computer system including a processor core according to some examples.
FIG. 2 illustrates thread runtime telemetry circuitry according to examples of the disclosure.
FIG. 3 illustrates an example format of a control register to enable thread runtime telemetry according to some examples.
FIG. 4 illustrates a computer system including a first plurality of physical processor cores of a first type and a second plurality of physical processor cores of a second type, where each core of the first type is to implement a plurality of logical processor cores according to some examples.
FIGS. 5A-5B illustrate an example format for hardware feedback telemetry data (e.g., per logical processor core) according to some examples.
FIG. 6 illustrates a hardware feedback data structure for hardware feedback telemetry data storing an energy efficiency capability value and a performance capability value for each logical processor core of a computer system according to some examples.
FIG. 7 is a flow diagram illustrating operations of a method of performing dynamic simultaneous multi-threading (SMT) scheduling (e.g., including SMT core isolation) according to some examples.
FIG. 8 is a flow diagram illustrating operations of another method of performing dynamic simultaneous multi-threading (SMT) scheduling according to some examples.
FIG. 9 illustrates examples of a processing apparatus.
FIGS. 10A-B illustrates examples of a processor that supports performance and energy-efficient compute.
FIG. 10C illustrates an example method for implementing performance and energy-efficient compute.
FIG. 11 illustrates an example computing system.
FIG. 12 illustrates a block diagram of an example processor and/or System on a Chip (SoC) that may have one or more cores and an integrated memory controller.
FIG. 13 is a block diagram illustrating a computing system 1300 configured to implement one or more aspects of the examples described herein.
FIG. 14 is a block diagram illustrating the use of a software instruction converter to convert binary instructions in a source ISA to binary instructions in a target ISA according to examples.
FIG. 15 is a block diagram illustrating an IP core development system 1500 that may be used to manufacture an integrated circuit to perform operations according to some examples.

### DETAILED DESCRIPTION

The present disclosure relates to methods, apparatus, systems, and non-transitory computer-readable storage media for utilizing a low power cluster as a performance cluster in an energy constrained configuration. Some processors provide an operating system with hints or other types of guidance on the performance and energy efficiency capability of each of the cores in the processor. This information can then be used by the operating system when determining where to schedule a software thread that is ready to run. However, current processors do not have the ability guide the operating system to schedule a class of work only on a specific module or set of modules. Existing solutions may guide the OS to spread work across multiple modules, which may be lower performance and/or less energy efficient than containing that work on one or more specific modules.

Examples detailed herein add a capability to monitor (over time) the behavior of all work running on the compute IPs on the system, determine the compute capability required, and provide a hint to the operating system to consolidate all work on specific modules when that work runs better when contained on those specific modules. In addition to the telemetry and logic required to make these decisions, some examples create a new hint to be communicated to the OS to consolidate the work currently in the system onto a subset of the available compute modules. Examples extend the capabilities of providing the operating system with guidance on the optimal scheduling of the entire current set of active threads, rather than making suboptimal decisions at the individual thread level. As an example, consolidating the work that fits energy efficiently on the low power island on a product is expected to provide several 100mw lower power than would be achieved with existing scheduling hints and OS scheduler behavior. This substantially increases the energy efficiency of key classes of workloads.

In some examples, a power management unit (sometimes referred to as a "Punit" which executes PCODE) coordinates IP states to achieve lowest power state for the processor and exiting lower power states (e.g., after low power and/or thermal issues are relaxed). Additionally, the SoC power management unit decides when throttling actions are to be engaged. In some examples, power management unit waits for a certain time between the action (wait time/hysteresis can be unique for each action) and/or PCODE can choose to observe the system power/temperature before measuring the impact of the last action before engaging the next action. Additionally, the power management unit may engage many actions in parallel in accordance with the corresponding PCODE.

A (e.g., hardware) processor (e.g., having one or more cores) may execute instructions (e.g., a thread of instructions) to operate on data, for example, to perform arithmetic, logic, or other functions. For example, software may request an operation and a hardware processor (e.g., a core or cores thereof) may perform the operation in response to the request. Software may request execution of a (e.g., software) thread. An operating system (OS) may include a scheduler (e.g., "O.S. scheduler") to schedule execution of (e.g., software) threads on a hardware processor, e.g., to schedule execution of (e.g., software) threads on one or more logical processors (e.g., one or more logical processor cores) of the hardware processor. Each logical processor may be referred to as a respective central processing unit (CPU).

In certain examples, a hardware processor implements multi-threading (e.g., multithreading), e.g., executing multiple threads simultaneously on one physical processor core. In certain examples, multi-threading is temporal multi-threading (e.g., super-threading), for example, where only one thread of instructions can execute in any given pipeline stage at a time. In certain examples, multi-threading is simultaneous multi-threading (SMT) (e.g., Intel^{®} Hyper-Threading), for example, where instructions from more than one thread can be executed in any given pipeline stage at a time. In certain examples, SMT allows two (or more) concurrent threads to run on a single physical processor core, e.g., the single physical processor core being exposed to software (e.g., an operating system) as a first logical processor core to execute a first thread and a second logical processor core to execute a second thread.

In certain examples, SMT improves multi-threaded (MT) performance by virtualizing a physical processor core (e.g., an SMT physical processor core) into a plurality of logical processors (e.g., logical processor cores). In certain examples, all logical processors (e.g., logical processors cores) of a hardware processor are exposed to an operating system (executing on the hardware processor) as individual logical processors (e.g., logical processor cores). In certain examples, this abstraction allows the operating system to schedule software threads across all logical processors (e.g., logical processor cores) available, thereby maximizing throughput and multi-threaded (MT) performance. However, in certain examples there is an issue with the underlying SMT physical processor core's resources (e.g., fetch circuit, decode circuit, execution circuit, etc.) are shared among the logical processors, and thus performance of each individual active logical processor (e.g., logical processor core) is significantly lower than the performance of the physical SMT core when another "sibling" logical thread(s) is active on the same physical SMT core (e.g., where there are a plurality of logical processor cores being active on the same physical SMT core). This leads to poor performance and responsiveness on certain workloads, e.g., lightly threaded workloads initiated by user, when concurrent background threads start competing for processor (e.g., central processing unit (CPU)) time on the same SMT physical processor core. Further, certain processors (e.g., as returned by a core type request by the OS) do not differentiate between a logical core and physical (e.g., SMT) core.

In certain examples, an application (e.g., software) that has a user start it and/or interact with it is referred to as a foreground application, e.g., and an application that runs independently of a user is referred to as a background application. In certain examples, foreground versus background is a priority level assigned to programs running (e.g., not "stopped") in a multitasking environment, e.g., where the foreground (FG) contains the application(s) the user is working on (for example, an application that is to receive input(s) from a user and/or provide output to the user, e.g., via a graphical user interface (GUI)), and the background (BG) contains the application(s) that are run behind the system (e.g., without user interaction).

Examples herein are directed to methods and circuitry to allow a thread of (e.g., foreground) application to use a physical SMT core in isolation (e.g., disabling all but the single logical processor core of the physical SMT core being used by the thread), e.g., but if the (e.g., foreground) application is only using a certain threshold of (e.g., 2) cores, then allow another (e.g., background) (e.g., MT) application to use the rest of the free (e.g., unused) physical SMT core(s) for its usage, e.g., maximizing both foreground and background performance.

In certain examples, an asymmetric platform (e.g., processor) utilizes different types of cores, e.g., (i) a first type of processor core (e.g., a lower power, lower maximum frequency, and/or more energy efficient core) (e.g., an efficient core ("E-core")) (e.g., "little" core or "small" core) and (ii) and a second, higher performance type of processor core (e.g., a higher power and/or higher frequency core) (e.g., a performance core ("P-core")) (e.g., "big" core). In certain examples, one of the types of cores utilizes SMT (e.g., each of its physical processor cores implements a plurality of logical processor cores), for example, and the other type of core does not use SMT (e.g., each of its physical processor cores implements only a single logical processor core). In certain examples, an efficient core ("E-core") runs at a (maximum) lower frequency, and thus execute instructions with lower performance compared to a performance core ("P-core").

In certain examples, this issue with the underlying SMT physical processor core's resources being shared among the logical processors causing the performance of each individual active logical processor (e.g., logical processor core) to be significantly lower than the performance of the physical SMT core when another "sibling" logical thread(s) is active on the same physical SMT core is even more prevalent on hybrid platforms (e.g., hybrid processors) that include a first set of cores that do not support SMT and a second set of cores that support SMT. For example, in order to maximize the performance for foreground applications (e.g., foreground processes) on a hybrid platform (e.g., hybrid processor), certain OSes attempt to restrict background tasks to non-SMT cores (e.g., E-cores) via a corresponding (e.g., "small only") scheduling policy. However, such a scheduling policy causes a significant performance degradation for user-initiated multi-threaded workloads (e.g., compiler, render, etc.) running as "background". Hence there is a need for a dynamic solution that delivers core isolation for lightly threaded foreground tasks while not compromising performance on user-initiated MT background tasks when no critical foreground task is active on the system.

Examples herein are directed to methods and circuitry to maximize SMT performance on hybrid system (e.g., processor) platforms by: (i) providing user-initiated (e.g., lightly threaded) critical compute intensive tasks in the foreground the necessary SMT core isolation (e.g., disabling all but a single logical processor core of a physical SMT core that is to be used) on SMT core(s) (e.g., certain P-cores) when it runs concurrently in a multi-threaded background (e.g., "noisy") environment, and/or (ii) allowing user-initiated critical multi-threaded background tasks (e.g., compilation, render, etc.) to run on SMT core(s) (e.g., certain P-cores) when desired, e.g., without being restricted by a static (e.g., "small only") scheduling configuration for background tasks. In certain examples, the scheduling configuration is selected with an operating system, e.g., an operating system's scheduler.

One software-based solution to address this issue includes static OS core parking policies that attempts to provide core isolation by parking logical threads based on thread concurrency and utilization and static scheduling policies while restricting background tasks only to core(s) that do not support SMT (e.g., certain E-cores). However, such static OS parking policies fail to deliver necessary core isolation for critical threads when they run concurrently in a multi-threaded background environment, e.g., high concurrency and overall utilization (for example, average CPU utilization, e.g., "CO"). Even in absence of critical tasks in foreground, configuring static OS scheduling policy for background tasks to "small only" significantly degrades performance of user-initiated MT tasks (e.g., compilation, render, etc.) that require high performance. Certain examples herein allow an OS to implement SMT isolation support, e.g., while running concurrent scenarios of mixed quality of service (QoS) (e.g., both foreground and background applications).

Certain examples herein detect instances when core isolation is to be used based on concurrency (e.g., of threads running on the processor) and/or utilization of the user-initiated (e.g., in contrast to system-initiated) critical foreground tasks running on the system and the nature of the system (e.g., system-on-a-chip (SoC)) workload running on the system (e.g., sustained SoC workload due to high multi-threaded background activity). When lightly threaded compute intensive critical tasks are detected to run in a noisy sustained background environment, certain examples herein isolate the SMT core's resources to dedicate them for the critical task scheduled on the active logical processor of the SMT core by force parking sibling logical processor(s) that share the SMT core's resources, e.g., which temporarily restricts compute resources for the multi-threaded background tasks running on the system to the subset of remaining available cores. When compute requirements on the critical task change due to low utilization and/or highly concurrency, certain examples herein do not apply the core isolation via SMT sibling parking, e.g., and a less restrictive (e.g., small or idle) scheduling policy is used by the OS. In one example, a "small or idle" scheduling policy causes the scheduling of a thread to attempt to schedule a task (e.g., thread) to an idle efficient core (e.g., E-core) (e.g., small core) (e.g., non-SMT core) and if none are available (e.g., no efficient cores are idle), then to attempt to schedule the task to an idle performance core (e.g., P-core) (e.g., big core) (e.g., SMT core). In another example, a scheduling policy causes the scheduling of a thread to attempt to schedule a task (e.g., thread) to an idle non-SMT physical core and if none are available (e.g., no non-SMT cores are idle), then to attempt to schedule the task to an idle SMT physical core, for example, and if none of those are available, to attempt to schedule the task to an idle logical core of an SMT core.

In certain examples, a processor generates "capability" values to differentiate logical processors (e.g., CPUs) with different (e.g., current) computing capability (e.g., computing throughput). In certain examples, a processor generates capability values that are normalized in a (e.g., 256, 512, 1024, etc.) range. In certain examples, a processor is able to estimate how busy and/or energy efficient a logical processor (e.g., CPU) is (e.g., on a per class basis) via the capability values, e.g., and an OS scheduler is to utilize the capability values when evaluating performance versus energy trade-offs for scheduling threads.

In certain examples, the performance (Perf) capability value of a logical processor (e.g., CPU) represents the amount of work it can absorb when running at its highest frequency, e.g., compared to the most capable logical processor (e.g., CPU) of the system. In certain examples, the performance (Perf) capability value for a single logical processor (e.g., CPU) is a value (e.g., an 8-bit value indicating values of 0 to 255) that specifies the relative performance level of the logical processor, e.g., where higher values indicate higher performance and/or the lowest performance level of 0 indicates a recommendation to the OS to not schedule any threads on it for performance reasons.

In certain examples, the energy efficiency (EE) capability value of a logical processor (e.g., CPU) represents its energy efficiency (e.g., in performing processing). In certain examples, the energy efficiency (EE) capability value of a single logical processor (e.g., CPU) is a value (e.g., an 8-bit value indicating values of 0 to 255) that specifies the relative energy efficiency level of the logical processor, e.g., where higher values indicate higher energy efficiency and/or the lowest energy efficiency capability of 0 indicates a recommendation to the OS to not schedule any software threads on it for efficiency reasons. In certain examples, an energy efficiency capability of the maximum value (e.g., 255) indicates which logical processors have the highest relative energy efficiency capability. In certain examples, the maximum value (e.g., 255) is an explicit recommendation for the OS to consolidate work on those logical processors for energy efficiency reasons.

**In** certain examples, the functionality discussed herein (e.g., the core isolation via the parking of one or more SMT sibling logical core) is implemented as a hardware-based solution, e.g., using thread runtime telemetry (e.g., at nanosecond granularity) circuitry (e.g., Intel^{®} Thread Director circuitry, e.g., microcontroller) to dynamically park an SMT core's logical core sibling(s) (e.g., when concurrent scenarios are executed). In certain examples, a processor (e.g., via non-transitory machine-readable medium that stores power management code (e.g., p-code)) determines, using per energy performance preference (EPP) group utilization and quality of service (QoS), if there is limited threaded high QoS and/or low EPP activity (e.g., foreground threads) and multi-threaded low QoS and/or high EPP activity (e.g., background threads). In certain examples, if so, then the processor (e.g., via non-transitory machine-readable medium that stores power management code (e.g., p-code)) will populate a data structure that stores telemetry data (e.g., per logical processor core) to cause the dynamic parking of an SMT core's logical core sibling(s). In certain examples, such a data structure stores the data of thread runtime telemetry circuitry, e.g., the data of (i) Hardware Guide Scheduler (HGS) (or HGS+) circuitry or (ii) Thread Director circuitry. In certain examples, the processor is to cause a write of a (e.g., capability) value (e.g., zero or about zero) to the entry or entries of the sibling logical processor core(s) of a logical processor core of an SMT physical processor core to hint to the OS (e.g., to the OS scheduler) to avoid using those sibling logical processor core(s), e.g., to avoid scheduling a thread on those sibling logical processor core(s).

In certain examples, the thread runtime telemetry circuitry (e.g., (i) Hardware Guide Scheduler (HGS) (or HGS+) circuitry or (ii) Thread Director circuitry) (e.g., via its corresponding data structure) communicates numeric performance and numeric power efficiency capabilities of each logical core in a certain (e.g., 0 to 255) (e.g., 0 to 511) (e.g., 0 to 1023) range to the OS in real-time. In certain examples, when either the performance or energy capabilities efficiency of a logical processor core (e.g., CPU) is zero, the hardware dynamically adapts to the current instruction mix and recommends not scheduling any tasks on such logical core.

In certain examples, the functionality discussed herein (e.g., the core isolation via the parking of one or more SMT sibling logical cores) is implemented as a non-transitory machine-readable medium that stores system code, e.g., system code that, when executed, dynamically parks an SMT core's logical core sibling(s). In one example, the non-transitory machine-readable medium stores a system software driver (e.g., Intel^{®} Dynamic Tuning Technology (DTT) software driver), for example, a system software driver that, when executed, dynamically optimizes the system for performance, battery life, and thermals.

Examples herein thus deliver unique hybrid processor (e.g., utilizing SMT cores and non-SMT cores) differentiation by delivering significant performance gains by better utilization of cores that have SMT (e.g., hyper-threading) enabled. Examples herein utilize core isolation via the parking of one or more SMT sibling logical cores to deliver significant responsiveness and performance gains during concurrent usages involving lightly threaded tasks (e.g., application launch, page load, speedometer (e.g., that tests a browser's web app responsiveness by timing simulated user interactions), etc.) running with multi-threaded background tasks (e.g., compilation and/or render in background). Examples here are directed to a less restrictive scheduling for processors (e.g., platforms) that allows user-initiated multi-threaded background tasks (e.g., compiler and/or renderer) to take advantage of SMT processor cores when desired.

Certain (e.g., default) OS scheduling policies on hybrid platforms (e.g., utilizing SMT cores and non-SMT cores) do not provide flexibility to customers. In certain examples, scheduling background thread(s) on a less powerful non-SMT physical processor core (e.g., efficient core (E-core)) (e.g., small core) only is too restrictive because the (e.g., multi-threaded) background work initiated by a user (e.g., compile and/or render) cannot take advantage of a more powerful SMT physical processor core (e.g., performance core (P-core)) (e.g., big core). In certain examples, scheduling background thread(s) on a less powerful non-SMT physical processor core (e.g., efficient core (E-core)) (e.g., small core) or an idle SMT physical processor core (e.g., performance core (P-core)) (e.g., big core) impacts foreground (FG) performance during concurrent usages (e.g., due to sharing of SMT core with critical threads from lack of core isolation). The above shortcomings are overcome with dynamic SMT scheduling disclosed herein, e.g., that provides core isolation via forced core parking of logical SMT sibling processors when desired (e.g., when necessary) while allowing a less restrictive (e.g., "small or idle") scheduling policy for user-initiated background tasks (e.g., compiler/render, etc.) running on the system to take advantage of SMT physical processor cores (e.g., performance cores (P-cores)) (e.g., big cores). Being able to dynamically achieve SMT isolation at run time allows an OS (e.g., OS scheduler) to use a less restrictive scheduling policy (e.g., "small or idle") for user-initiated background tasks without concerns on impact to foreground responsiveness.

Certain examples herein do not totally disable SMT (e.g., for an entire processor), e.g., do not disable SMT either through a hardware initialization manager (e.g., Basic Input/Output System (BIOS) firmware or Unified Extensible Firmware Interface (UEFI) firmware) or by having the OS only schedule work on one of the threads.

In some examples, performance on a hybrid architecture is optimized when a user/OS/platform configures the system to work in an energy savings mode. Typically, this is performed though controlling the frequency of the running cores and therefore improving energy consumption at the cost of performance reduction. Examples detailed herein improve efficiency further and increase performance by hinting the OS through thread runtime telemetry circuitry (e.g., thread runtime telemetry circuitry 116) to shift performance-oriented tasks towards the efficient cores (e.g., efficient core(s) 916 and/or efficient cores of CPU cores 928) when the user / platform /OS choses to work in an energy saving mode.

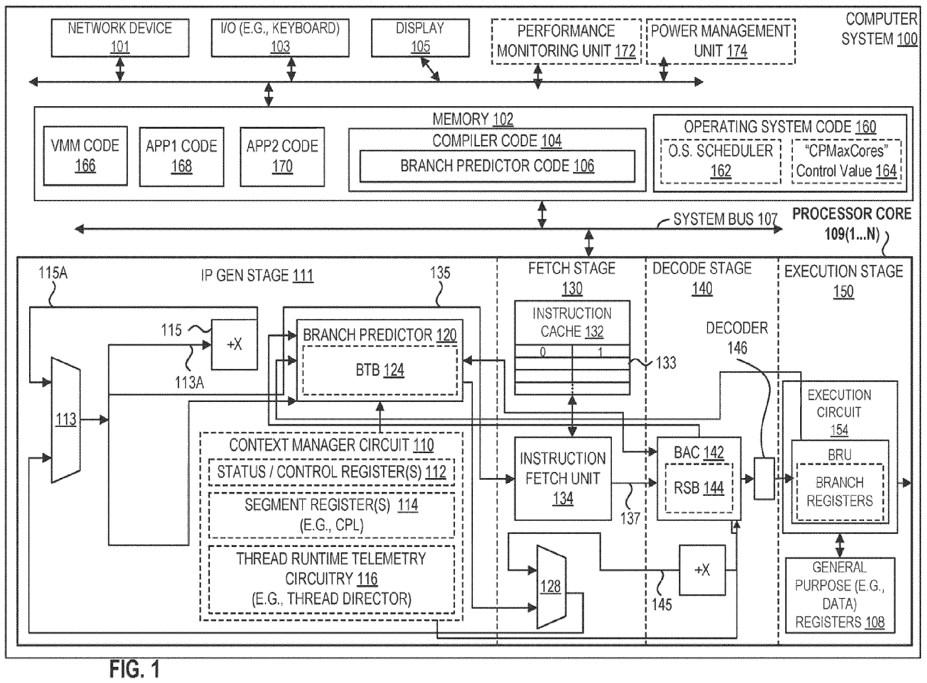

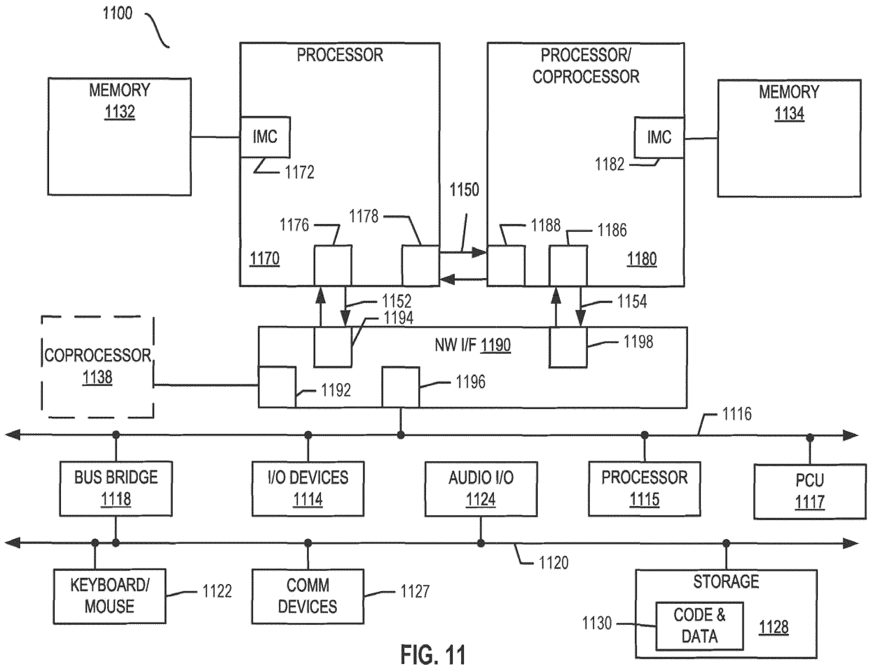

FIG. 1 illustrates a computer system including a processor core according to some examples. Processor core 109 includes multiple components (e.g., microarchitectural prediction and caching mechanisms) that may be shared by multiple contexts (e.g., virtualized as a plurality of logical processors implemented on a single SMT core). For example, branch target buffer (BTB) 124, instruction cache 132, and/or return stack buffer (RSB) 144 may be shared by multiple contexts. Certain examples include a context manager circuit 110 to maintain multiple unique states associated with a plurality of contexts simultaneously, and switch active contexts among those tracked by the context manager circuit. In certain examples, processor core 109 is an instance of processor core 1190 in FIG. 11B.

Depicted computer system 100 includes a branch predictor 120 and a branch address calculator 142 (BAC) in a pipelined processor core 109(1)-109(N) according to examples of the disclosure. Referring to FIG. 1, a pipelined processor core (e.g., 109(1)) includes an instruction pointer generation (IPtr Gen) stage 111, a fetch stage 130, a decode stage 140, and an execution stage 150. In one example, computer system 100 includes multiple cores 109(1-N), where N is any positive integer. In another example, computer system 100 includes a single core.

In certain examples, each processor core 109(1-N) instance supports multi-threading (e.g., executing two or more parallel sets of operations or threads on a first and second logical core), and may do so in a variety of ways including time sliced multi-threading, simultaneous multi-threading (e.g., where a single physical core provides a logical core for each of the threads that physical core is simultaneously multi-threading), or a combination thereof (e.g., time sliced fetching and decoding and simultaneous multi-threading thereafter). In the depicted example, each single processor core 109(1) to 109(N) includes an instance of branch predictor 120. Branch predictor 120 may include a branch target buffer (BTB) 124.

In certain examples, branch target buffer 124 stores (e.g., in a branch predictor array) the predicted target instruction corresponding to each of a plurality of branch instructions (e.g., branch instructions of a section of code that has been executed multiple times). In the depicted example, a branch address calculator (BAC) 142 is included which accesses (e.g., includes) a return stack buffer 144 (RSB). In certain examples, return stack buffer 144 is to store (e.g., in a stack data structure of last data in is the first data out (LIFO)) the return addresses of any CALL instructions (e.g., that push their return address on the stack).

Branch address calculator (BAC) 142 is used to calculate addresses for certain types of branch instructions and/or to verify branch predictions made by a branch predictor (e.g., BTB). In certain examples, the branch address calculator performs branch target and/or next sequential linear address computations. In certain examples, the branch address calculator performs static predictions on branches based on the address calculations.

In certain examples, the branch address calculator 142 contains a return stack buffer 144 to keep track of the return addresses of the CALL instructions. In one example, the branch address calculator attempts to correct any improper prediction made by the branch predictor 120 to reduce branch misprediction penalties. As one example, the branch address calculator verifies branch prediction for those branches whose target can be determined solely from the branch instruction and instruction pointer.

In certain examples, the branch address calculator 142 maintains the return stack buffer 144 utilized as a branch prediction mechanism for determining the target address of return instructions, e.g., where the return stack buffer operates by monitoring all "call subroutine" and "return from subroutine" branch instructions. In one example, when the branch address calculator detects a "call subroutine" branch instruction, the branch address calculator pushes the address of the next instruction onto the return stack buffer, e.g., with a top of stack pointer marking the top of the return stack buffer. By pushing the address immediately following each "call subroutine" instruction onto the return stack buffer, the return stack buffer contains a stack of return addresses in this example. When the branch address calculator later detects a "return from subroutine" branch instruction, the branch address calculator pops the top return address off of the return stack buffer, e.g., to verify the return address predicted by the branch predictor 120. In one example, for a direct branch type, the branch address calculator is to (e.g., always) predict taken for a conditional branch, for example, and if the branch predictor does not predict taken for the direct branch, the branch address calculator overrides the branch predictor's missed prediction or improper prediction.

In certain examples, core 109 includes circuitry to validate branch predictions made by the branch predictor 120. Each branch predictor 120 entry (e.g., in BTB 124) may further include a valid field and a bundle address (BA) field which are used to increase the accuracy and validate branch predictions performed by the branch predictor 120, as is discussed in more detail below. In one example, the valid field and the BA field each consist of one bit one-bit fields. In other examples, however, the size of the valid and BA fields may vary. In one example, a fetched instruction is sent (e.g., by BAC 142 from line 137) to the decoder 146 to be decoded, and the decoded instruction is sent to the execution circuit (e.g., unit) 154 to be executed.

Depicted computer system 100 includes a network device 101, input/output (I/O) circuit 103 (e.g., keyboard), display 105, and a system bus (e.g., interconnect) 107.

In one example, the branch instructions stored in the branch predictor 120 are pre-selected by a compiler as branch instructions that will be taken. In certain examples, the compiler code 104, as shown stored in the memory 102 of FIG. 1, includes a sequence of code that, when executed, translates source code of a program written in a high-level language into executable machine code. In one example, the compiler code 104 further includes additional branch predictor code 106 that predicts a target instruction for branch instructions (for example, branch instructions that are likely to be taken (e.g., pre-selected branch instructions)). The branch predictor 120 (e.g., BTB 124 thereof) is thereafter updated with a target instruction for a branch instruction. In one example, software manages a hardware BTB, e.g., with the software specifying the prediction mode or with the prediction mode defined implicitly by the mode of the instruction that writes the BTB also setting a mode bit in the entry.

Memory 102 may include operating system (OS) code 160, virtual machine monitor (VMM) code 162, first application (e.g., program) code 168, second application (e.g., program) code 170, or any combination thereof.

In certain examples, OS code 160 is to implement an OS scheduler 162, e.g., utilizing thread runtime telemetry circuitry 116 (e.g., (i) Hardware Guide Scheduler (HGS) (or HGS+) circuitry or (ii) Thread Director circuitry) of processor core 109 to schedule one or more threads for processing in core 109 (e.g., logical core of a plurality of logical cores implemented by core 109). In certain examples, the OS scheduler 162 is to implement one or more scheduling modes (e.g., selects from a plurality of scheduling modes). In certain examples, a scheduling mode causes the scheduling of thread(s) with a dynamic SMT scheduling disclosed herein, for example, to provide SMT core isolation via forced core parking of logical SMT sibling processors when desired (e.g., when necessary), e.g., while allowing a less restrictive (e.g., "small or idle") scheduling policy for user-initiated background tasks (e.g., compiler/render, etc.) running on the system to take advantage of SMT physical processor cores (e.g., performance cores (P-cores)) (e.g., big cores). In certain examples, an OS 160 includes a control value 164, e.g., to set a number of logical processors that can be in an un-parked (or idle) state at any given time. In certain examples, control value 164 (e.g., "CPMaxCores") is set (e.g., by a user) to specify the maximum percentage of logical processors (e.g., in terms of logical processors within each Non-Uniform Memory Access (NUMA) node, e.g., as discussed below) that can be in the un-parked state at any given time. In one example (e.g., in a NUMA node) with sixteen logical processors, configuring the value of this setting to 50% ensures that no more than eight logical processors are ever in the un-parked state at the same time. In certain examples, the value of this "CPMaxCores") setting will automatically be rounded up to a minimum number of cores value (e.g., "CPMinCores") that specifies the minimum percentage of logical processors (e.g., in terms of all logical processors that are enabled on the system within each NUMA node) that can be placed in the un-parked state at any given time. In one example (e.g., in a NUMA node) with sixteen logical processors, configuring the value of this "CPMinCores" setting to 25% ensures that at least four logical processors are always in the un-parked state. In certain examples, the Core Parking functionality is disabled if the value of this setting is 100%.

In certain examples, non-uniform memory access (NUMA) is a computer system architecture that is used with multiprocessor designs in which some regions of memory have greater access latencies, e.g., due to how the system memory and physical processors (e.g., processor cores) are interconnected. In certain examples, some memory regions are connected directly to one or more physical processors, with all physical processors connected to each other through various types of interconnection fabric. In certain examples, for large multiprocessor (e.g., multi-core) systems, this arrangement results in less contention for memory and increased system performance. In certain examples, a NUMA architecture divides memory and processors into groups, called NUMA nodes. In certain examples, from the perspective of any single processor in the system, memory that is in the same NUMA node as that processor is referred to as local, and memory that is contained in another NUMA node is referred to as remote (e.g., where a processor (e.g., core) can access local memory faster).

In certain examples virtual machine monitor (VMM) code 166 is to implement one or more virtual machines (VMs) as an emulation of a computer system. In certain examples, VMs are based on a specific computer architecture and provide the functionality of an underlying physical computer system. Their implementations may involve specialized hardware, firmware, software, or a combination. In certain examples, Virtual Machine Monitor (VMM) (also known as a hypervisor) is a software program that, when executed, enables the creation, management, and governance of VM instances and manages the operation of a virtualized environment on top of a physical host machine. A VMM is the primary software behind virtualization environments and implementations in certain examples. When installed over a host machine (e.g., processor) in certain examples, a VMM facilitates the creation of VMs, e.g., each with separate operating systems (OS) and applications. The VMM may manage the backend operation of these VMs by allocating the necessary computing, memory, storage and other input/output (I/O) resources, such as, but not limited to, an input/output memory management unit (IOMMU). The VMM may provide a centralized interface for managing the entire operation, status and availability of VMs that are installed over a single host machine or spread across different and interconnected hosts.

As discussed below, depicted core (e.g., branch predictor 120 thereof) includes access to one or more registers. In certain examples, core include one or more general purpose register(s) 108 and/or one more status/control registers 112.

In certain examples, each entry for the branch predictor 120 (e.g., in BTB 124 thereof) includes a tag field and a target field. In one example, the tag field of each entry in the BTB stores at least a portion of an instruction pointer (e.g., memory address) identifying a branch instruction. In one example, the tag field of each entry in the BTB stores an instruction pointer (e.g., memory address) identifying a branch instruction in code. In one example, the target field stores at least a portion of the instruction pointer for the target of the branch instruction identified in the tag field of the same entry. Moreover, in other example, the entries for the branch predictor 120 (e.g., in BTB 124 thereof) includes one or more other fields. In certain examples, an entry does not include a separate field to assist in the prediction of whether the branch instruction is taken, e.g., if a branch instruction is present (e.g., in the BTB), it is considered to be taken.

As shown in FIG. 1, the IPtr Gen mux 113 of IPtr generation stage 111 receives an instruction pointer from line 115A. The instruction pointer provided via line 115A is generated by the incrementer circuit 115, which receives a copy of the most recent instruction pointer from the path 113A. The incrementer circuit 115 may increment the present instruction pointer by a predetermined amount, to obtain the next sequential instruction from a program sequence presently being executed by the core.

In one example, upon receipt of the IPtr from IPtr Gen mux 113, the branch predictor 120 compares a portion of the IPtr with the tag field of each entry in the branch predictor 120 (e.g., BTB 124). If no match is found between the IPtr and the tag fields of the branch predictor 120, the IPtr Gen mux will proceed to select the next sequential IPtr as the next instruction to be fetched in this example. Conversely, if a match is detected, the branch predictor 120 reads the valid field of the branch predictor entry which matches with the IPtr. If the valid field is not set (e.g., has a logical value of 0) the branch predictor 120 considers the respective entry to be "invalid" and will disregard the match between the IPtr and the tag of the respective entry in this example, e.g., and the branch target of the respective entry will not be forwarded to the IPtr Gen Mux. On the other hand, if the valid field of the matching entry is set (e.g., has a logical value of 1), the branch predictor 120 proceeds to perform a logical comparison between a predetermined portion of the instruction pointer (IPtr) and the branch address (BA) field of the matching branch predictor entry in this example. If an "allowable condition" is present, the branch target of the matching entry will be forwarded to the IPtr Gen mux, and otherwise, the branch predictor 120 disregards the match between the IPtr and the tag of the branch predictor entry. In some example, the entry indicator is formed from not only the current branch IPtr, but also at least a portion of the global history.

More specifically, in one example, the BA field indicates where the respective branch instruction is stored within a line of cache memory 132. In certain examples, a processor is able to initiate the execution of multiple instructions per clock cycle, wherein the instructions are not interdependent and do not use the same execution resources.

For example, each line of the instruction cache 132 shown in FIG. 1 includes multiple instructions (e.g., six instructions). Moreover, in response to a fetch operation by the fetch unit 134, the instruction cache 132 responds (e.g., in the case of a "hit") by providing a full line of cache to the fetch unit 134 in this example. The instructions within a line of cache may be grouped as separate "bundles." For example, as shown in FIG. 1, the first three instructions in a cache line 133 may be addressed as bundle 0, and the second three instructions may be address as bundle 1. Each of the instructions within a bundle are independent of each other (e.g., can be simultaneously issued for execution). The BA field provided in the branch predictor 120 entries is used to identify the bundle address of the branch instruction which corresponds to the respective entry in certain examples. For example, in one example, the BA identifies whether the branch instruction is stored in the first or second bundle of a particular cache line.

In one example, the branch predictor 120 performs a logical comparison between the BA field of a matching entry and a predetermined portion of the IPtr to determine if an "allowable condition" is present. For example, in one example, the fifth bit position of the IPtr (e.g. IPtr[4]) is compared with the BA field of a matching (e.g., BTB) entry. In one example, an allowable condition is present when IPtr [4] is not greater than the BA. Such an allowable condition helps prevent the apparent unnecessary prediction of a branch instruction, which may not be executed. That is, when less than all of the IPtr is considered when doing a comparison against the tags of the branch predictor 120, it is possible to have a match with a tag, which may not be a true match. Nevertheless, a match between the IPtr and a tag of the branch predictor indicates a particular line of cache, which includes a branch instruction corresponding to the respective branch predictor entry, may about to be executed. Specifically, if the bundle address of the IPtr is not greater than the BA field of the matching branch predictor entry, then the branch instruction in the respective cache line is soon to be executed. Hence, a performance benefit can be achieved by proceeding to fetch the target of the branch instruction in certain examples.

As discussed above, if an "allowable condition" is present, the branch target of the matching entry will be forwarded to the IPtr Gen mux in this example. Otherwise, the branch predictor will disregard the match between the IPtr and the tag. In one example, the branch target forwarded from the branch predictor is initially sent to a Branch Prediction (BP) resteer mux 128, before it is sent to the IPtr Gen mux. The BP resteer mux 128, as shown in FIG. 1, may also receive instruction pointers from other branch prediction devices. In one example, the input lines received by the BP resteer mux will be prioritized to determine which input line will be allowed to pass through the BP resteer mux onto the IPtr Gen mux.

In addition to forwarding a branch target to the BP resteer mux, upon detecting a match between the IPtr and a tag of the branch predictor, the BA of the matching branch predictor entry is forwarded to the Branch Address Calculator (BAC) 142. The BAC 142 is shown in FIG. 1 to be located in the decode stage 140, but may be located in other stage(s). The BAC of may also receive a cache line from the fetch unit 134 via line 137.

The IPtr selected by the IPtr Gen mux is also forwarded to the fetch unit 134, via data line 135 in this example. Once the IPtr is received by the fetch unit 134, the cache line corresponding to the IPtr is fetched from the instruction cache 132. The cache line received from the instruction cache is forwarded to the BAC, via data line 137.

Upon receipt of the BA in this example, the BAC will read the BA to determine where the pre-selected branch instruction (e.g., identified in the matching branch predictor entry) is located in the next cache line to be received by the BAC (e.g., the first or second bundle of the cache line). In one example, it is predetermined where the branch instruction is located within a bundle of a cache line (e.g., in a bundle of three instructions, the branch instruction will be stored as the second instruction).

In alternative examples, the BA includes additional bits to more specifically identify the address of the branch instruction within a cache line. Therefore, the branch instruction would not be limited to a specific instruction position within a bundle.

After the BAC determines the address of the pre-selected branch instruction within the cache line, and has received the respective cache line from the fetch unit 134, the BAC will decode the respective instruction to verify the IPtr truly corresponds to a branch instruction. If the instruction addressed by BA in the received cache line is a branch instruction, no correction for the branch prediction is necessary. Conversely, if the respective instruction in the cache line is not a branch instruction (i.e., the IPtr does not correspond to a branch instruction), the BAC will send a message to the branch predictor to invalidate the respective branch predictor entry, to prevent similar mispredictions on the same branch predictor entry. Thereafter, the invalidated branch predictor entry will be overwritten by a new branch predictor entry.

In addition, in one example, the BAC will increment the IPtr by a predetermined amount and forward the incremented IPtr to the BP resteer mux 128, via data line 145, e.g., the data line 145 coming from the BAC will take priority over the data line from the branch predictor. As a result, the incremented IPtr will be forwarded to the IPtr Gen mux and passed to the fetch unit in order to correct the branch misprediction by fetching the instructions that sequentially follow the IPtr.

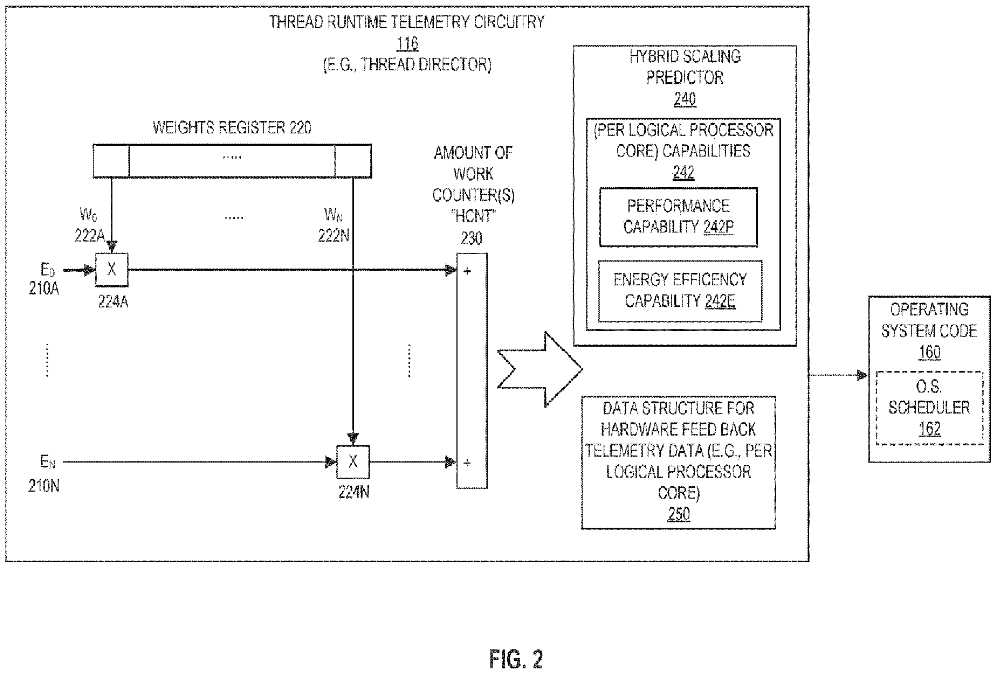

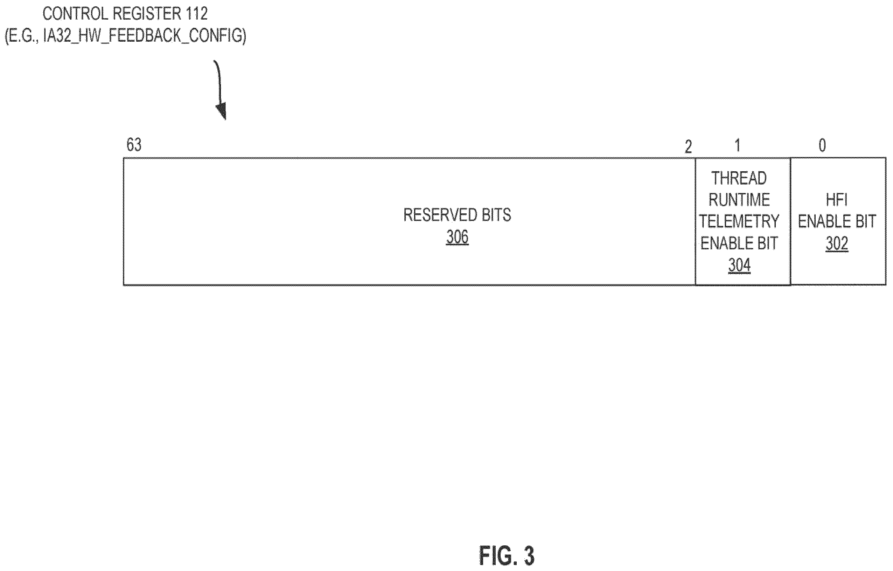

In certain examples, the context manager circuit 110 allows one or more of the above discussed shared components to be utilized by multiple contexts, e.g., while alleviating information being leaked across contexts by directly or indirectly observing the information stored. Computing system 100 (e.g., core 109) may include a control register (e.g., model specific register(s)) 112 (e.g., as discussed below in reference to FIG. 3)), a segment register 114 (e.g., indicating the current privilege level), a thread runtime telemetry circuitry 116 (e.g., as discussed below in reference to FIGS. 2-6), or any combination thereof. Segment register 114 may store a value indicating a current privilege level of software operating on a logical core, e.g., separately for each logical core. In one example, current privilege level is stored in a current privilege level (CPL) field of a code segment selector register of segment register 114. In certain examples, processor core 109 requires a certain level of privilege to perform certain actions, for example, actions requested by a particular logical core (e.g., actions requested by software running on that particular logical core).

Each thread may have a context. In certain examples, contexts are identified by one or more of the following properties: 1) a hardware thread identifier such as a value that identifies one of multiple logical processors (e.g., logical cores) implemented on the same physical core through techniques such as simultaneous multi-threading (SMT); 2) a privilege level such as implemented by rings; 3) page table base address or code segment configuration such as implemented in a control register (e.g., CR3) or code segment (CS) register; 4) address space identifiers (ASIDs) such as implemented by Process Context ID (PCID) or Virtual Process ID (VPID) that semantically differentiate the virtual-to-physical mappings in use by the CPU; 5) key registers that contain cryptographically sealed assets (e.g., tokens) used for determination of privilege of the executing software; and/or 6) ephemeral - a context change such as a random reset of context.

Over any non-trivial period of time, many threads (e.g., contexts thereof) may be active within a physical core. In certain examples, system software time-slices between applications and system software functions, potentially allowing many contexts access to microarchitectural prediction and/or caching mechanisms.

An instance of a thread runtime telemetry circuitry 116 (e.g., (i) Hardware Guide Scheduler (HGS) (or HGS+) circuitry or (ii) Thread Director circuitry) may be in each core 109(1-N) of computer system 100 (e.g., for each logical processor implemented by a core). A single instance of a thread runtime telemetry circuitry 116 may be anywhere in computer system 100, e.g., a single instance of thread runtime telemetry circuitry used for all cores 109(1-N) present.

In one example, status/control registers 112 include status register(s) to indicate a status of the processor core and/or control register(s) to control functionality of the processor core. In one example, one or more (e.g., control) registers are (e.g., only) written to at the request of the OS running on the processor, e.g., where the OS operates in privileged (e.g., system) mode, but not for code running in non-privileged (e.g., user) mode. In one example, a control register can only be written to by software running in supervisor mode, and not by software running in user mode. In certain examples, control register 112 includes a field to enable the thread runtime telemetry circuitry 116, e.g., as shown in FIG. 3.

In certain examples, decoder 146 decodes an instruction, and that decoded instruction is executed by the execution circuit 154, for example, to perform operations according to the opcode of the instruction.

In certain examples, decoder 146 decodes an instruction, and that decoded instruction is executed by the execution circuit 154, for example, to reset one or more capabilities (or one more software thread runtime property histories), e.g., of thread runtime telemetry circuitry 116.

Computer system 100 may include performance monitoring circuitry 172, e.g., including any number of performance counters therein to count, monitor, and/or log events, activity, and/or other measure related to performance. In various examples, performance counters may be programmed by software running on a core to log performance monitoring information. For example, any of performance counters may be programmed to increment for each occurrence of a selected event, or to increment for each clock cycle during a selected event. The events may include any of a variety of events related to execution of program code on a core, such as branch mispredictions, cache hits, cache misses, translation lookaside buffer hits, translation lookaside buffer misses, etc. Therefore, performance counters may be used in efforts to tune or profile program code to improve or optimize performance. In certain examples, thread runtime telemetry circuitry 116 is part of performance monitoring circuitry 172. In certain examples, thread runtime telemetry circuitry 116 is separate from performance monitoring circuitry 172. Computer system 100 may include a power management unit 174 to monitor power usage, etc.

In certain examples, thread runtime telemetry circuitry 116 (e.g., (i) Hardware Guide Scheduler (HGS) (or HGS+) circuitry or (ii) Thread Director circuitry) is to generate "capability" values to differentiate logical processors (e.g., CPUs) of each physical processor core 109 with different (e.g., current) computing capability (e.g., computing throughput). In certain examples, the thread runtime telemetry circuitry 116 generates capability values that are normalized in a (e.g., 256, 512, 1024, etc.) range. In certain examples, the thread runtime telemetry circuitry 116 is able to estimate how busy and/or energy efficient a logical processor (e.g., CPU) is (e.g., on a per class basis) via the capability values, e.g., and an OS scheduler 162 is to utilize the capability values when evaluating performance versus energy trade-offs for scheduling threads.

In certain examples, the performance (Perf) capability value of a logical processor (e.g., CPU) represents the amount of work it can absorb when running at its highest frequency, e.g., compared to the most capable logical processor (e.g., CPU) of the system 100. In certain examples, the performance (Perf) capability value for a single logical processor (e.g., CPU) of the system 100 is a value (e.g., an 8-bit value indicating values of 0 to 255) that specifies the relative performance level of the logical processor, e.g., where higher values indicate higher performance and/or the lowest performance level of 0 indicates a recommendation to the OS to not schedule any threads on it for performance reasons.

In certain examples, the energy efficiency (EE) capability value of a logical processor (e.g., CPU) of the system 100 represents its energy efficiency (e.g., in performing processing). In certain examples, the energy efficiency (EE) capability value of a single logical processor (e.g., CPU) is a value (e.g., an 8-bit value indicating values of 0 to 255) that specifies the relative energy efficiency level of the logical processor, e.g., where higher values indicate higher energy efficiency and/or the lowest energy efficiency capability of 0 indicates a recommendation to the OS to not schedule any software threads on it for efficiency reasons. In certain examples, an energy efficiency capability of the maximum value (e.g., 255) indicates which logical processors have the highest relative energy efficiency capability. In certain examples, the maximum value (e.g., 255) is an explicit recommendation for the OS to consolidate work on those logical processors for energy efficiency reasons.

In certain examples, the functionality discussed herein (e.g., the core isolation via the parking of one or more SMT sibling logical core) is implemented by using thread runtime telemetry circuitry 116 (e.g., Intel^{®} Thread Director circuitry, e.g., microcontroller) to dynamically park an SMT core's logical core sibling(s) (e.g., when concurrent scenarios are executed). In certain examples, a processor (e.g., via non-transitory machine-readable medium that stores power management code (e.g., p-code)) determines, using per energy performance preference (EPP) group utilization and quality of service (QoS), if there is limited threaded high QoS and/or low EPP activity (e.g., foreground threads) and multi-threaded low QoS and/or high EPP activity (e.g., background threads). In certain examples, if so, then the processor (e.g., via non-transitory machine-readable medium that stores power management code (e.g., p-code)) will populate a data structure that stores telemetry data (e.g., per logical processor core) of the thread runtime telemetry circuitry 116 to cause the dynamic parking of an SMT core's logical core sibling(s). In certain examples, such a data structure stores data of (i) Hardware Guide Scheduler (HGS) (or HGS+) circuitry or (ii) Thread Director circuitry. In certain examples, the thread runtime telemetry circuitry 116 is to cause a write of a (e.g., capability) value (e.g., zero or about zero) to the entry or entries of the sibling logical processor core(s) of a logical processor core of an SMT physical processor core to hint to the OS 160 (e.g., to the OS scheduler 162) to avoid using those sibling logical processor core(s), e.g., to avoid scheduling a thread on those sibling logical processor core(s).

In certain examples, the thread runtime telemetry circuitry 116 (e.g., (i) Hardware Guide Scheduler (HGS) (or HGS+) circuitry or (ii) Thread Director circuitry) (e.g., via its corresponding data structure) communicates numeric performance and numeric power efficiency capabilities of each logical core in a certain (e.g., 0 to 255) (e.g., 0 to 511) (e.g., 0 to 1023) range to the OS in real-time. In certain examples, when either the performance or energy capabilities efficiency of a logical processor core (e.g., CPU) is zero, the thread runtime telemetry circuitry 116 adapts to the current instruction mix and recommends not scheduling any tasks on such logical core.

In certain examples, thread runtime telemetry circuitry 116 predicts capability values based on the dynamic characteristics of a system (e.g., eliminating a need to run a workload on each core to measure its amount of work), for example, by providing ISA-level counters (e.g., number of load instructions) that may be shared among various cores, and lowering the hardware implementation costs of performance monitoring by providing a single counter based on multiple performance monitoring events.

Each core 109 of computer system 100 may be the same (e.g., symmetric cores) or a proper subset of one or more of the cores may be different than the other cores (e.g., asymmetric cores). In one example, a set of asymmetric cores includes a first type of core (e.g., a lower power core) and a second, higher performance type of core (e.g., a higher power core). In certain examples, an asymmetric processor is a hybrid processor that includes one or more less powerful non-SMT physical processor cores (e.g., efficient cores (E-cores)) (e.g., small cores) and one or more SMT physical processor cores (e.g., performance cores (P-cores)) (e.g., big cores).

In certain examples, a computer system includes multiple cores that all execute a same instruction set architecture (ISA). In certain examples, a computer system includes multiple cores, each having an instruction set architecture (ISA) according to which it executes instructions issued or provided to it and/or the system by software. In this specification, the use of the term "instruction" may generally refer to this type of instruction (which may also be called a macro-instruction or an ISA-level instruction), as opposed to: (1) a micro-instruction or micro-operation that may be provided to execution and/or scheduling hardware as a result of the decoding (e.g., by a hardware instruction-decoder) of a macro-instruction, and/or (2) a command, procedure, routine, subroutine, or other software construct, the execution and/or performance of which involves the execution of multiple ISA-level instructions.

In some such systems, the system may be heterogeneous because it includes cores that have different ISAs. A system may include a first core with hardware, hardwiring, microcode, control logic, and/or other micro-architecture designed to execute particular instructions according to a particular ISA (or extensions to or other subset of an ISA), and the system may also include a second core without such micro-architecture. In other words, the first core may be capable of executing those particular instructions without any translation, emulation, or other conversion of the instructions (except the decoding of macro-instructions into micro-instructions and/or micro-operations), whereas the second core is not. In that case, that particular ISA (or extensions to or subset of an ISA) may be referred to as supported (or natively supported) by the first core and unsupported by the second core, and/or the system may be referred to as having a heterogeneous ISA.

In other such systems, the system may be heterogeneous because it includes cores having the same ISA but differing in terms of performance, power consumption, and/or some other processing metric or capability. The differences may be provided by the size, speed, and/or microarchitecture of the core and/or its features. In a heterogeneous system, one or more cores may be referred to as "big" because they are capable of providing, they may be used to provide, and/or their use may provide and/or result in a greater level of performance (e.g., greater instructions per cycle (IPtrC)), power consumption (e.g., less energy efficient), and/or some other metric than one or more other "small" or "little" cores in the system.

In these and/or other heterogeneous systems, it may be possible for a task to be performed by different types of cores. Furthermore, it may be possible for a scheduler (e.g., a hardware scheduler and/or a software scheduler 162 of an operating system 160 executing on the processor) to schedule or dispatch tasks to different cores and/or migrate tasks between/among different cores (generally, a "task scheduler"). Therefore, efforts to optimize, balance, or otherwise affect throughput, wait time, response time, latency, fairness, quality of service, performance, power consumption, and/or some other measure on a heterogeneous system may include task scheduling decisions.

For example, if a particular task is mostly stalled due to long latency memory accesses, it may be more efficient to schedule it on a "small" core (e.g., E-core) and save power of an otherwise bigger core (e.g., P-core). On the other hand, heavy tasks may be scheduled on a big core (e.g., P-core) to complete the compute sooner, e.g., and let the system go into sleep/idle sooner. Due to the diversity of workloads a system (e.g., a client) can perform, the dynamic characteristics of a workload, and conditions of the system itself, it might not be straightforward for a pure software solution to make such decisions. Therefore, the use of examples herein (e.g., of a thread runtime telemetry circuitry) may be desired to provide information upon which such decisions may be based, in part or in full. Furthermore, the use of these examples may be desired in efforts to optimize and/or tune applications based on the information that may be provided.

A processor may include a thread runtime telemetry circuitry 116 that is shared by multiple contexts (and/or cores), e.g., as discussed further below in reference to FIGS. 2-6. A processor may contain other shared structures dealing with state including, for example, prediction structures, caching structures, a physical register file (renamed state), and buffered state (a store buffer). Prediction structures, such as branch predictors or prefetchers, may store state about past execution behavior that is used to predict future behavior. A processor may use these predictions to guide speculation execution, achieving performance that would not be possible otherwise. Caching structures, such as caches or TLBs, may keep local copies of shared state so as to make accesses by the processor (e.g., very) fast.

FIG. 2 illustrates thread runtime telemetry circuitry 116 according to examples of the disclosure. Thread runtime telemetry circuitry 116 (and/or hybrid scaling predictor 240) may be implemented in logic gates and/or any other type of circuitry, all or parts of which may be included in a discrete component (e.g., microcontroller) and/or integrated into the circuitry of a processing device or any other apparatus in a computer or other information processing system, for example, implemented in a core (such as core 109 in FIG. 1) and/or a system agent in a heterogeneous SoC.

In certain examples, thread runtime telemetry circuitry 116 generates one or more software thread runtime property histories (e.g., including the weight values and/or HCNT counter values discussed herein). In FIG. 2, each of any number of unweighted event counts (shown as E0 210A to EN 210N) represents an unweighted event count or any other output of a performance counter (generally, each an "unweighted event count"), such as any performance counters in performance monitoring circuitry 172 and/or thread runtime telemetry circuitry 116 of FIG. 1. In various examples, E0 210A to EN 210N may represent a set of any number of unweighted event counts including any number of subsets of unweighted event counts from different (e.g., logical) cores. For example, the unweighted event counts may be from performance counters all in one (e.g., logical) core, from one or more performance counters in a first (e.g., logical) core plus one or more performance counters in a second (e.g., logical) core, from one or more performance counters in a first (e.g., logical) core plus one or more performance counters in a second (e.g., logical) core plus one or more performance counters in a third (e.g., logical) core, and so on. Furthermore, any one of more of the event counts (e.g., E0 210A to EN 210N) may represent an output of (e.g., feedback from) an active runtime (e.g., work) counter, such as work counter 230 (as described below), as in an example in which a hierarchical arrangement of performance and work counters is implemented (note that in such an example, an event count may be referred to as an unweighted event count, even though it may have been generated by a work counter based on weighted event counts).

In FIG. 2, weights register 220 represents a programmable or configurable register or other storage location (or combination of storage locations), to store any number of weight values (shown as w0 222A to wN 222N), each weight value corresponding to one of the unweighted event counts and to be used by a corresponding weighting unit (shown as weighting units 224A to 224N) to weight the corresponding unweighted event count and generate a weighted event count. The weight values may be a tuned set of values. For example, software or firmware may assign a weight value of 1 to E0 and a weight value of 2 to EN, in which case weighting unit 224A may weight (e.g., scale or multiply) E0 by a factor of 1 and weighting unit 224N may weight (e.g., scale or multiply) EN by a factor of 2. In various examples, any weight values (including 0), range of weight values, and/or weighting approach (e.g., multiplying, dividing, adding, etc.) may be used. In various examples, implementations of a weights register and/or weighting units may limit the choice of weight values to one of a number of possible weight values.

In FIG. 2, weighted event counts (shown as the outputs of weighting units 224A to 224N) are received for processing by a work counter (shown as heterogenous (e.g., hybrid) counter (HCNT) 230, but may be used for homogenous or heterogenous processors/systems). In an example, the processing of weighted event counts may include summing the weighted event counts to generate a measure of an amount of work (generally, a "measured work amount"). Various examples may provide for this measured work amount to be based on a variety of performance measurements or other parameters, each scaled or manipulated in a variety of ways, and to be used for a variety of purposes. In an example, a work counter may be used to provide a dynamic profile of the current workload.

For example, HCNT 230 may be used to generate a weighted sum of various classes of performance monitoring events that can be dynamically estimated by all cores in a system (e.g., SoC). HCNT 230 may be used to predict a thread runtime telemetry circuitry (e.g., HGS or Thread Director) class, e.g., HCNT 230 may be used as a source for hybrid scaling predictor 240 and/or for any software having access to HCNT 230. The events may be sub-classes of an ISA (e.g., AVX floating-point, AVX2 integer), special instructions (e.g., repeat string), or categories of bottlenecks (e.g., front-end bound from top-down analysis). The weights may be chosen to reflect a type of execution code (e.g., memory stalls or branching code) and/or a performance ratio (e.g., 2 for an instruction class that executes twice as fast on a big core and 1 for all other instruction classes), a scalar of amount of work (e.g., 2 for fused-multiply instructions), etc.

Certain examples provide for any of a variety of events to be counted and/or summed, including events related to arithmetic floating-point (e.g., 128-bit) vector instructions, arithmetic integer (e.g., 256-bit) vector instructions, arithmetic integer vector neural network instructions, load instructions, store instructions, repeat strings, top-down micro-architectural analysis (TMA) level 1 metrics (e.g., front-end bound, back-end bound, bad speculation, retiring), and/or any performance monitoring event counted by any counter.

In addition to a work counter according to an example of the disclosure, FIG. 2 illustrates a representation of usages of a work counter according to examples of the disclosure, including use by a hybrid scaling predictor 240 and/or by any software (e.g., OS code 160) having access to the work counter. In an example, hybrid scaling predictor 240 (e.g., implemented in hardware or firmware) provides information (for example, direct or indirect information, e.g., by enabling range of indexes based on the counter values) to an OS 160 or other system software, and/or may be used to predict performance scaling (e.g., between big cores (e.g., P-cores) and little cores (e.g., E-cores)), e.g., by providing a hint based on the history to the hardware (e.g., via writing to hardware feedback data structure 250 that is read by the OS). In some examples, the hardware feedback data structure 250 is written to by power management unit 174.

In certain examples, hybrid scaling predictor 240 is to generate one or more capability values 242 (e.g., per logical processor core). In certain examples, the capability values 242 include a performance capability 242P (e.g., per logical processor core) and/or an energy efficiency capability 242E (e.g., per logical processor core).

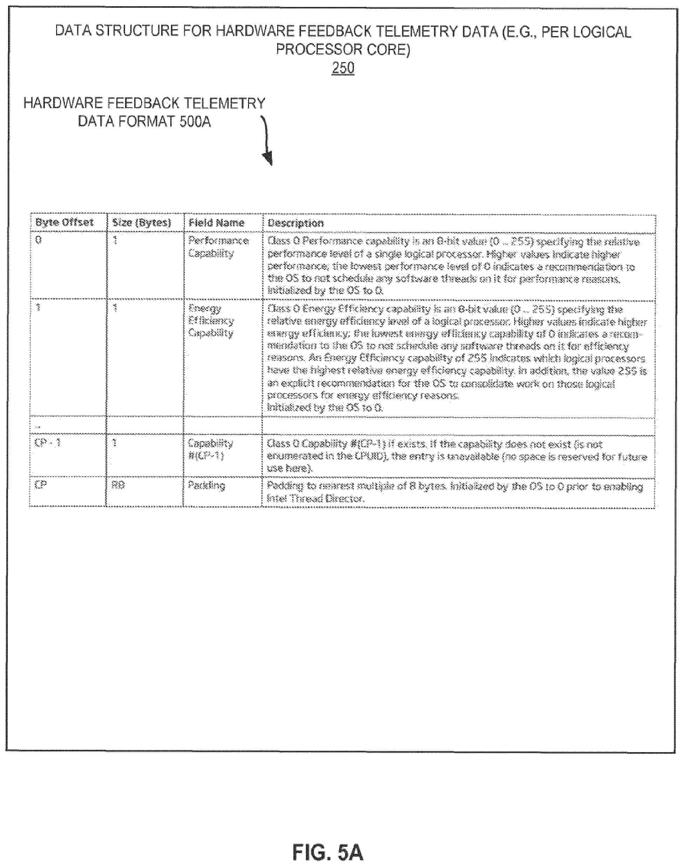

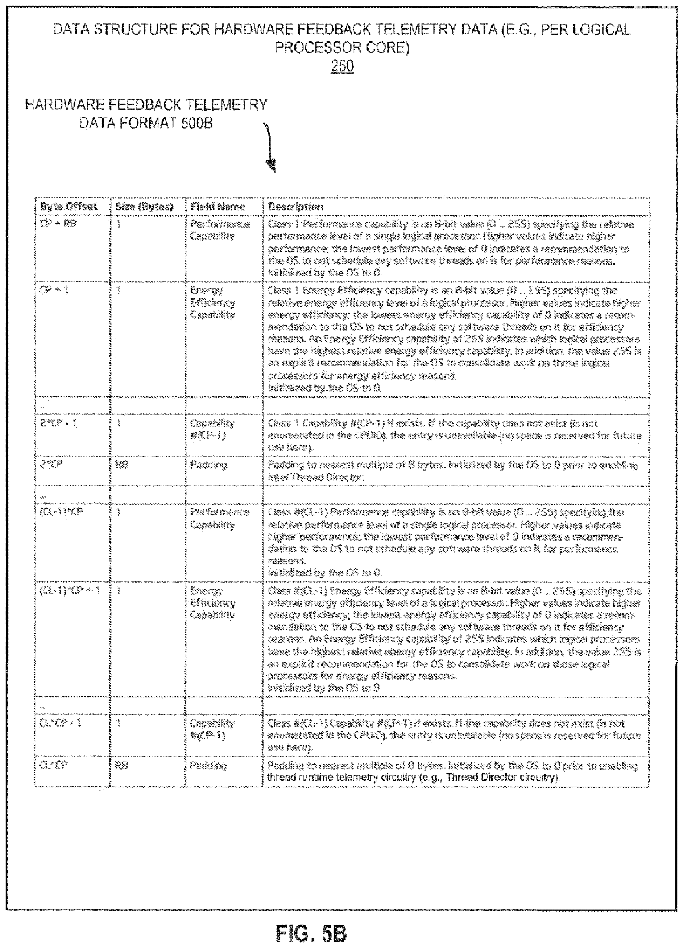

In certain examples, the data generated by thread runtime telemetry circuitry 116 is stored in hardware feedback hardware feedback data structure 250, e.g., with one or more sets of entries for each logical processor core. In certain examples, the data structure is (e.g., a table) according to the example format in FIGS. 5A-5B. In certain examples, the hardware feedback data structure 250 (e.g., accessible by OS code 160 or at least OS scheduler 162 thereof) is stored in storage of the thread runtime telemetry circuitry 116 (e.g., within thread runtime telemetry circuitry 116 or separate from the thread runtime telemetry circuitry 116, e.g., in system memory 102 of the system 100). In certain examples, the data in this hardware feedback data structure 250 is modifiable (e.g., by thread runtime telemetry circuitry 116 and/or power management unit 174) to implement core isolation via forced core parking of logical SMT sibling processors when desired.

In an example, a work counter may be used to provide hints (e.g., capability values) (e.g., written into hardware feedback data structure 250) to an operating system running on a heterogeneous (e.g., or homogenous) SoC or system, where the hints may provide for task scheduling that may improve performance and/or quality of service. For example, a homogeneous system including one or more instances of the same core for use in optimal multicore thread scheduling. For example, a heterogeneous client system including one or more big cores (e.g., P-cores) and one more little cores (e.g., E-cores) may be used to run an artificial intelligence (AI) application (e.g., a machine learning model) including a particular class of instructions that may speed up processing of the type of instructions typically used in the AI application, e.g., particularly or only if executed on a big core (e.g., P-core). The use of a work counter programmed to monitor execution of this class of instruction may provide hints to an OS 160 to guide the OS scheduler 162 to schedule threads including these instructions on big cores (e.g., P-cores) instead of little cores (e.g., E-cores), thereby improving performance and/or quality of service.

In certain examples, the weight values in register 220 are programmable to provide for tuning of the weights (e.g., in a lab) based on actual results. In examples, one or more weights of zero may be used to disconnect a particular event or class of events. In examples, one of more weights of zero may be used for isolating various components that feed into a work counter. Examples herein may support an option for hardware and/or software (e.g., an OS) to enable/disable a work counter for any of a variety of reasons, for example, to avoid power leakage when the work counter is not in use.

In one example, scheduler 162 of operating system code 160 in FIG. 1 uses thread runtime telemetry circuitry 116 (and/or hybrid scaling predictor 240) to select the best core (e.g., type) (or other component) to be used to execute a thread for a software thread, e.g., a software thread of first application code (e.g., first application code 168 in FIG. 1) or second application code (e.g., second application code 170 in FIG. 1). In certain examples, scheduler 162 of operating system code 160 in FIG. 1 uses the capability values 242 (e.g., a performance capability 242P per logical processor core) and/or an energy efficiency capability 242E per logical processor core) (e.g., stored in hardware feedback data structure 250) are used to implement dynamic SMT scheduling disclosed herein, for example, to provide core isolation via forced core parking of logical SMT sibling processors when desired (e.g., when necessary), e.g., while allowing a less restrictive (e.g., "small or idle") scheduling policy for user-initiated background tasks (e.g., compiler/render, etc.) running on the system to take advantage of SMT physical processor cores (e.g., performance cores (P-cores)) (e.g., big cores).

In certain examples, software thread runtime property histories (e.g., including the weight values and/or HCNT counter values discussed herein) of thread runtime telemetry circuitry 116 may be useful for a first software thread but not for a following second software thread. In other examples, it may be desirable to clear (e.g., to set to zero) certain software thread runtime property histories (e.g., capability values), e.g., to provide core isolation via forced core parking of logical SMT sibling processors when desired.

Thus, certain examples herein provide an instruction (and method) to clear the software thread runtime property histories, for example, to clear the capability values of a certain logical processor (e.g., and not other logical processor(s)), e.g., to provide core isolation via forced core parking of logical SMT sibling processors. For example, clearing the HCNT counter current value (e.g., and thus the impact of this value of the full prediction flow). For example, clearing the current values of the counters E0 ... En and/or HCNT 230 in FIG. 2.

In one example, the instruction mnemonic is "HRESET" but for other examples, it can be another mnemonic. The usage opcode of HRESET can include an immediate operand, other types of operands, or zero explicit operands (e.g., defined without use of any operand). In one example, the hardware (e.g., processor core) ignores any immediate operand value (e.g., without causing an exception (e.g., fault)) and/or any request specific setting. It should be understood that other examples may utilize an immediate operand value (e.g., such that is reserved for other uses). In another example where the instruction includes an immediate operand, it is possible to define that this immediate operand will include only zero (e.g., or cause an exception (e.g., fault) otherwise when executing the instruction). Other operand values may not be supported, and an incorrect setting can generate an exception like Invalid Opcode (e.g., UnDefined Opcode or General Protection Fault).

In one example, an instruction is to ignore an explicit (e.g., immediate) operand, while its implicit operand (e.g., not explicitly specified in a field of the instruction) may be a general purpose register (e.g., EAX register) (e.g., of general purpose registers 108 in FIG. 1) (e.g., to enable 32 options of bit mask configuration). Other Another option is to define the instruction without an explicit immediate operand and in this case a valid use may be indicated by the opcode (e.g., corresponding to the mnemonic of HRESET), for example, while its implicit operand (e.g., not explicitly specified in a field of the instruction) may be a general purpose register (e.g., EAX register) (e.g., of general purpose registers 108 in FIG. 1). In certain examples, the implicit operand is a single register (e.g., EAX) or a concatenation of a plurality of registers (e.g., EAX:EDX is to concatenate the contents of register EAX followed by the contents of register EDX (e.g., to enable 64 options of bit mask configuration)).

In certain examples, an instruction utilizes a new opcode (e.g., not a legacy opcode of a legacy instruction), for example, such that hardware that does not support this instruction will not be able to execute it (e.g., and the exception undefined instruction will be happened in happen in a case like this). In certain examples, use of this instruction may include that software (e.g., an OS) is to check if the hardware supports execution of this instruction before scheduling execution of the instruction. In one example, the software is to check if the hardware supports execution of the instruction be executing a check (e.g., having a mnemonic of CPUID) instruction feature bit setting.

In certain examples, execution of the instruction is only allowed for a certain privilege level (for example, supervisor level (e.g., ring 0) and/or user level (e.g., ring 3)). In an example where the instruction is limited only to be used by supervisor level (e.g., an OS) (e.g., in ring 0 only), request for execution of the instruction for user level (e.g., a user application) generates an exception, e.g., a general-protection exception.

Certain examples herein define an instruction where the OS is able to select the components of the processor to be cleared (e.g., to (e.g., only) clear one or more logical processor's histories) (e.g., to (e.g., only) clear one or more of software thread runtime property histories). In one example, the instruction includes a control parameter to enable software (e.g., the OS) to control in runtime the exact history reset supported (e.g., in a much faster method over writing into an MSR). In certain examples, the control of the instruction is done by the instruction's parameters (e.g., a data register that enables 32-bit control options and/or a set of data registers that enables 64-bit control options). In certain examples, an instruction also defines OS control (e.g., opt-in) on the support capabilities of the instruction. In certain examples, an instruction takes an implicit operand (e.g., EAX) or an explicit operand.

In an example where the instruction is supported in user mode (e.g., ring 3), the OS may have the ability to control and opt-in what capabilities (e.g., of a plurality of capabilities) that the instruction include and/or what type of history this instruction can reset and in which way. In order to support this, in certain examples an OS assist (e.g., an OS system call of an application programming interface (API)) can be requested, and used to enable the instruction for user level code, indicate which reset (e.g., HRESET) support capabilities were enabled by the OS (e.g., and supported by the hardware), and/or used to control any reset (e.g., HRESET) instruction parameters (e.g., in supervisor level).

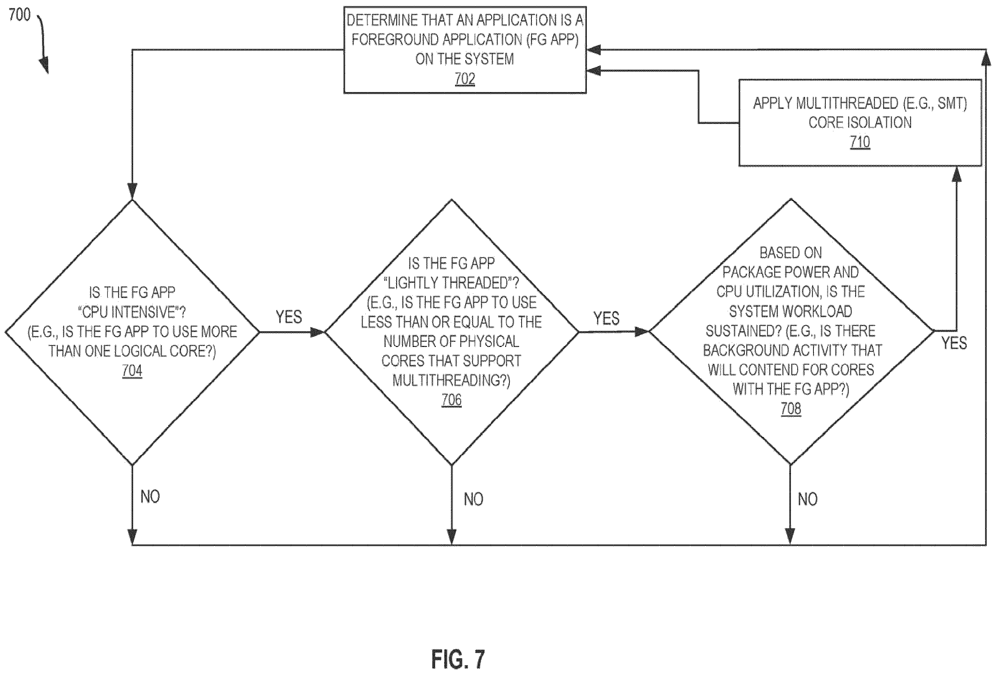

In one example, an OS sets this instruction as part of an OS scheduler runtime support, for example, to clear the capability values of a certain logical processor (e.g., and not other logical processor(s)) to provide core isolation via forced core parking of logical SMT sibling processors (e.g., as shown in FIG. 7). In certain examples, the instruction is defined with a new opcode so the software (e.g., OS) is to first check if the hardware supports this instruction and what are the capabilities of it before this instruction is able to be used. Thus, in one example, a different code path is defined by the software to support this instruction. For example, with the checking if the hardware supports the instruction performed by reading (e.g., CPUID) feature bit(s) to determine if the hardware supports this instruction. In one example, the software is to use this instruction only if the hardware supports it as indicated by its enumeration method.

In one example of a processor, execution is done in a speculative way. In order to avoid speculative history reset, it is possible that while the (e.g., HRESET) instruction is executed for a history reset (e.g., while all the checks to reset the history have happened, but before the history reset itself has happened), it will take an action as a pre serialized pre-serialized action instruction, e.g., where all prior (in program order) instructions have completed locally before the history reset is done. In one example, HRESET is used to avoid a history leak, e.g., in a core that executes instructions out of program order. Another possible support option is to enable pre-serialization instruction to support only on a subset of the history reset types that can be affected from the processor speculative execution method. In yet other another option, the instruction is supported as serialized. It is also possible to define the support as a serialized instruction only for specific HRESET capabilities and only when these HRESET capabilities are enabled to be in use. For example, options to select a pre-serialized instruction support method or a serialized instruction support method for a proper subset of history reset types may be used to limit any negative performance side effect of the pre-serialized or the serialized instruction support, e.g., where all prior (e.g., in program order) instructions have completed locally before the history reset is performed.

In one example, a reset (e.g., HRESET) instruction includes a control register (e.g., that the OS uses) in order to enable the different support features. In one example, as a default, all of the support features be disabled. In one example, the OS is to enable a subset or all of the support features. In one example, only the lower (e.g., 32) proper subset of bits are allocated for HRESET usage.

In certain examples, thread runtime telemetry circuitry 116 is enabled by a control register 112. An example format of this register is shown in FIG. 3.

FIG. 3 illustrates an example format of a control register 112 to enable thread runtime telemetry according to some examples. Format of control register 112 (e.g., IA32_HW_FEEDBACK_CONFIG) for a logical processor core may include bit indices [63:2] 306 as reserved, bit index one (bit position two) 304 to turn on thread runtime telemetry (e.g., the corresponding functionality of thread runtime telemetry circuitry 116), and/or bit index zero (bit position one) 302 to turn on hardware feedback interface (HFI). In certain examples, both bits 0 and 1 must be set for thread runtime telemetry circuitry 116 (e.g., Thread Director circuitry) to be enabled. In certain examples, the (e.g., extra) "class" columns in the run time telemetry (e.g., Thread Director) hardware feedback data structure 250 (e.g., table) are updated by hardware immediately following setting those two bits. In one example, the control register 112 (e.g., bits 0 302 and/or 1 304) thereof is only set (or reset) for a request made in supervisor mode. In some examples, the hardware feedback data structure 250 can be written to by a power management unit 174.

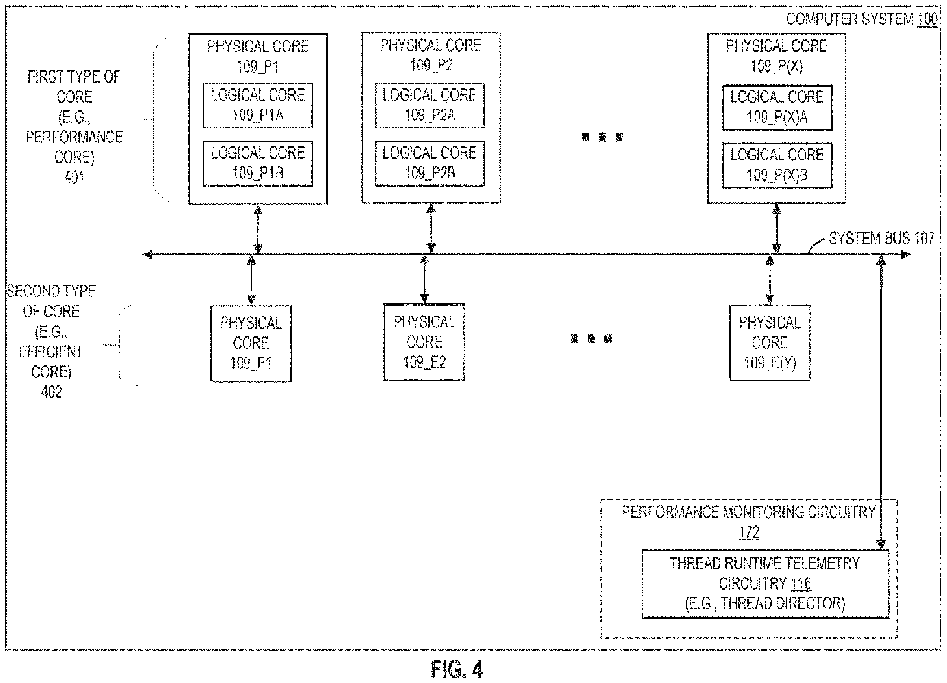

FIG. 4 illustrates a computer system 100 including a first plurality of physical processor cores of a first type 401 and a second plurality of physical processor cores of a second type 402, where each core of the first type is to implement a plurality of logical processor cores according to some examples. In certain examples, the first type of core 401 is a SMT physical processor core (e.g., performance core (P-core)) (e.g., big core). In certain examples, the second type of core 402 is a less powerful non-SMT physical processor core (e.g., efficient core (E-core)) (e.g., small core).

In certain examples, a computer system 100 includes a plurality of SMT types of physical cores of the first physical core type 401, e.g., "X" number of physical cores 401 where X is an integer greater than one. In certain examples, each SMT type of first physical core 401 implements a plurality of logical cores, e.g., an operating system (and application) views each logical core as if it is its own discrete core even where two logical cores are implemented by the same physical core. In FIG. 4, (e.g., performance) physical core 109P-1 implements logical core 109P-1A and logical core 109P-1B, (e.g., performance) physical core 109P-2 implements logical core 109P-2A and logical core 109P-2B, (e.g., performance) physical core 109P(X) implements logical core 109P(X)A and logical core 109P(X)B, etc.

In certain examples, a computer system 100 includes a plurality of non-SMT types (or in other examples, SMT types) of physical cores of the second physical core type 402, e.g., "Y" number of physical cores 402 where Y is an integer greater than one (e.g., where X and Y are equal in some examples and not equal in other examples). In certain examples, each non-SMT type of second physical core 402 implements only a single logical core. In FIG. 4, (e.g., energy efficiency) physical core 109E-1 implements a single logical core, (e.g., energy efficiency) physical core 109E-2 implements a single logical core, physical core 109E(Y) implements a single logical core, etc. In one example, computer system 100 includes six SMT physical processor cores of the first type 401 (e.g., 12 logical processor cores) and eight non-SMT physical processor cores of the second type 402, so 14 (6+8) physical processor cores but 20 (12+8) logical processor cores total for such a computer system 100.

In certain examples, thread runtime telemetry circuitry 116 (e.g., Thread Director circuitry) is to generate runtime telemetry data for the computer system 100 in FIG. 4, e.g., including one or more capability values generated for each logical core. In certain examples, performance monitoring circuitry 172 is to generate performance data for the computer system 100 in FIG. 4, e.g., not including one or more capability values for each logical core.

FIGS. 5A-5B illustrate an example format 500A-500B for hardware feedback telemetry data (e.g., per logical processor core) according to some examples. In certain examples, hardware feedback telemetry data according to format 500A-500B is generated by thread runtime telemetry circuitry 116 (e.g., Thread Director circuitry). In certain examples, hardware feedback telemetry data is stored in run time telemetry (e.g., Thread Director) hardware feedback data structure 250 (e.g., table). In certain examples, upper case CL is a class and upper case CP is a capability defined for the processor. In certain examples, a first capability is a performance capability, and a second capability is an energy efficiency capability. In certain examples, the various classes (CL) indicate (e.g., performance) differences between the cores (e.g., different core functionality), e.g., classes where certain cores (e.g., P-cores) offer higher performance than other cores (e.g., E-cores). For example, where a first class (e.g., class 1) indicates support for an ISA extension such as, but not limited to, vector extensions (e.g., AVX) (e.g., AVX2-FP32), matrix extensions (e.g., AMX), etc., and Class 2 indicates higher Vector Neural Network Instructions (VNNI) (e.g., AVX512 VNNI) performance differences. Certain examples include a class to track waits (e.g., UMWAITITPAUSE/PAUSE, etc.) to prevent Performance-cores (e.g., P-cores) from sitting idle while real work goes to the Efficient-cores (e.g., E-cores). Classes may also be used to indicate support for one or more accelerators or sub-types of accelerators (e.g., matrix accelerators, in-memory compute accelerators, etc.).

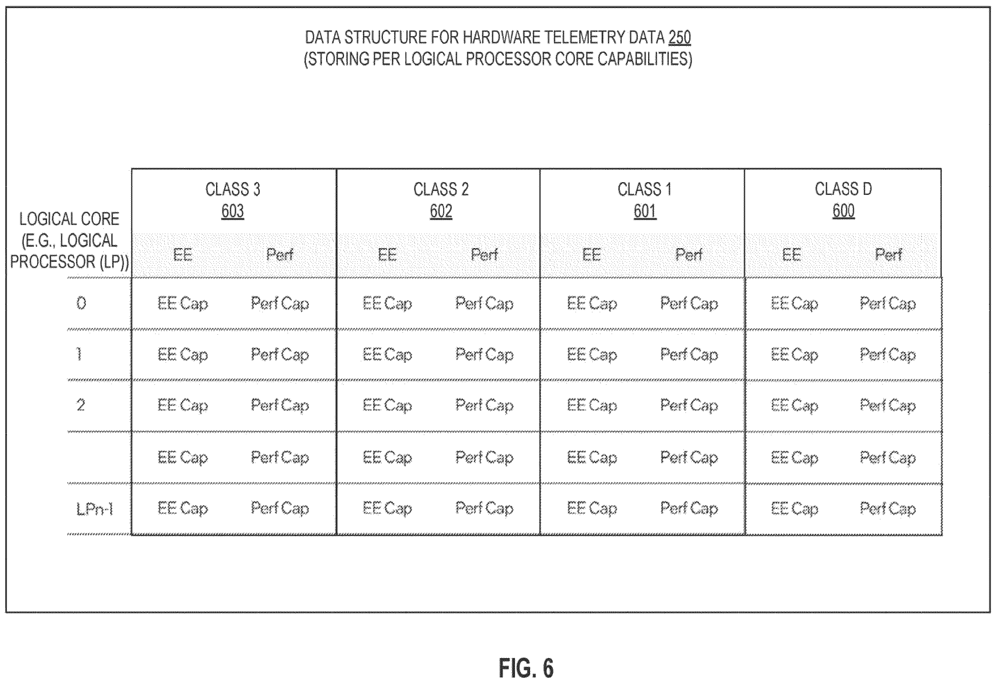

FIG. 6 illustrates a hardware feedback data structure 250 for hardware feedback telemetry data storing an energy efficiency capability value and a performance capability value for each logical processor core of a computer system according to some examples. In certain examples, thread runtime telemetry circuitry 116 (e.g., Thread Director circuitry) is to populate hardware feedback data structure 250 in FIG. 6 during runtime of a processor including logical processor cores to LPn-1 (e.g., this would be LP 0 to 19 for the 20 logical processor core example computer system 100 that includes six SMT physical processor cores of the first type 401 (e.g., 12 logical processor cores) and eight non-SMT physical processor cores of the second type 402. In certain examples, thread runtime telemetry circuitry 116 (e.g., hybrid scaling predictor 240 thereof) is to generate a performance capability (Perf Cap) 242P (e.g., per logical processor core) and/or an energy efficiency capability (EE Cap) 242E (e.g., per logical processor core), and populate hardware feedback data structure 250 in FIG. 6 (e.g., in runtime). In certain examples, this predicted capability is for a current time. In certain examples, the predicted performance capability (Perf Cap) and/or predicted energy efficiency capability (EE Cap) is generated (and populated in hardware feedback data structure 250) for each logical processor core and/or for each class (e.g., class D 600, Class 1 601, Class 2602, Class 3603, etc.).

In certain examples, an operating system (e.g., OS scheduler) is to choose between using the predicted performance capability (Perf Cap) and/or predicted energy efficiency capability (EE Cap) to schedule a thread on a particular logical processor (LP) (e.g., LP core), e.g., depending on parameters such as power policy, battery slider, etc.

In certain examples, an Operating System can determine the index for a Logical Processor Entry within the hardware feedback data structure 250 (e.g., Thread Director table) by executing a CPU Identification (CPUID) instruction on that logical processor, e.g., with a corresponding ID value returned to CPUID.06H.0H:EDX[31:16] of that logical processor.

### Checking/Triggering of SMT Core Isolation

Certain examples herein implement the dynamic SMT scheduling disclosed herein, for example, to provide core isolation via forced core parking of logical SMT sibling processors when desired (e.g., when necessary), e.g., while allowing a less restrictive (e.g., "small or idle") scheduling policy for user-initiated background tasks (e.g., compiler/render, etc.) running on the system to take advantage of SMT physical processor cores (e.g., performance cores (P-cores)) (e.g., big cores). For example, to avoid totally disabling simultaneous multi-threading (SMT) and/or only processing background tasks on less powerful (e.g., non-SMT) physical processor cores (e.g., E-cores) and/or because certain applications spawn threads based on logical core count and not just physical core count (e.g., the OS scheduler does not have the physical core count).

In certain examples, a determination on when to deliver core isolation is dependent on (i) utilization and thread concurrency of foreground tasks (e.g., threads for a foreground application, e.g., application 1 code 168 in FIG. 1) and (ii) overall workload characteristic based on package power and system-wise processor core utilization (e.g., e.g., with an Advanced Configuration and Power Interface (ACPI) standard's "C0" working state utilization percentage being referred to as "C0%").

FIG. 7 is a flow diagram illustrating operations 700 of a method of performing dynamic simultaneous multi-threading (SMT) scheduling (e.g., including SMT core isolation) according to some examples. Some or all of the operations 700 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. One example is, using EPP information, the machine (e.g., processor) can determine which code is high priority/QoS and which one is low priority/QoS, and if those tasks were to be scheduled on an SMT sibling of a same physical core, then provide isolation to higher priority/QoS code.

The operations 700 include, at block 702, determining if an application (e.g., an application that requested the operating system to execute a thread on a processing system) is a foreground application. In certain examples, this determining at block 702 includes checking if the application has a class of service (CLOS) (e.g., stored in a CLOS register of a processor) (e.g., in IA32_PQR_ASSOC MSR (e.g., 0xC8F)) that is below a threshold, for example, where a CLOS value below this threshold (e.g., CLOS=0) means it is a foreground application (e.g., has a high quality of service (high QoS)), e.g., and a CLOS value above this threshold means it is not a foreground application (e.g., it is a background application). In certain examples, this determining at block 702 includes checking if the application has an energy performance preference (EPP) value (e.g., stored in a hardware-controlled performance states (HWP) register (e.g., 0198H)) that is below a threshold, for example, where an EPP value below this threshold means it is a foreground application, e.g., and an EPP value above this threshold means it is not a foreground application (e.g., it is a background application). In certain examples, if the application (e.g., an application that requested the operating system to execute a thread on a processing system) is not a foreground application, the operations 700 cease (e.g., until another application requests the operating system to execute a thread on a processing system) and if it is a foreground (FG) application, the operations 700 proceed to block 704.

The operations 700 further include, at block 704, determining if the foreground application is CPU intensive, e.g., does the foreground application use more than a threshold number of (e.g., a single) logical processor core(s), and if no, proceeding back to block 702, and if yes, proceeding to block 706. In certain examples, this determining at block 704 includes checking if the average CPU utilization for that application (e.g., the application's C0) (e.g., as tracked by performance monitoring circuit 172) is greater than a threshold number of logical processor core(s), e.g., greater than a 100% of a logical processor core.

The operations 700 further include, at block 706, determining if the foreground application is lightly threaded, e.g., is the foreground application to use less than or equal to the number of physical cores that support multi-threading (e.g., SMT P-cores), and if no, proceeding back to block 702, and if yes, proceeding to block 708. In another example, instead of proceeding to block 708, the operations proceed to block 710 for core isolation, e.g., where block 708 is optional or not included. In certain examples, this determining at block 706 includes checking if the concurrency (e.g., number of threads that are to concurrently execute by the application) of the foreground application is less than the SMT core count (e.g., the SMT core count determined from a status register, e.g., MSR 0x35).

The operations 700 further include, at block 708, determining, based on package power and/or CPU utilization (e.g., system-wide C0%), is the system workload sustained, e.g., is there background activity (e.g., background application(s)) that will contend for cores with the foreground application, and if no, proceeding back to block 702, and if yes, proceeding to block 710.

The operations 700 further include, at block 710, applying SMT core isolation. In certain examples, the SMT core isolation at block 710 includes disabling each SMT physical core's (e.g., of all SMT physical cores of a system) logical cores except for one in each physical core, e.g., the rest of those logical cores of a single physical core being referred to as that one (not-disabled) logical core's "siblings". Using FIG. 4 as an example, in certain examples this would disable (e.g., not allow the use of) logical core 109_P1B, logical core 109_P2B, through logical core 109_P(X)B.

In certain examples, the SMT core isolation at block 710 includes disabling the sibling logical cores only for those SMT physical core's that are to be used by the foreground application (e.g., not all disabling the sibling logical cores for all the SMT physical cores of a system). Using FIG. 4 as an example, in certain examples the foreground application is to only use logical core 109_P1A of physical core 109_P1, and thus the operations at block 710 would include disabling (e.g., not allow the use of) logical core 109_P1B, but without disabling logical core 109_P2B through logical core 109_P(X)B. Using FIG. 4 as another example, in certain examples the foreground application is to only use logical core 109_P1A of physical core 109_P1 and logical core 109_P2A of physical core 109_P2, and thus the operations at block 710 would include disabling (e.g., not allow the use of) logical core 109_P1B and logical core 109_P2B, but without disabling logical core 109_P(X)B.

In certain examples, SMT core isolation (e.g., at block 710) is trigged for a request (e.g., a request to schedule a thread for an application), by checking:
If X% < foreground application's utilization < Y%
where X and Y represents foreground utilization thresholds between which SMT sibling logical cores can be parked during sustained workload. In certain examples, if foreground application's usage falls within this range, the foreground application's work does not spill over to SMT sibling logical cores, e.g., such that the SMT siblings may be parked to improve performance. In certain examples, this check also includes checking if "C0" (e.g., where C0 is the active time of that core/CPU) and package power-based system (e.g., SoC) workload detection on the platform is sustained, e.g., indicating sustained background activity that could impact the foreground application's responsiveness.

Referring again to the example of a computer system 100 that includes six SMT physical processor cores of the first type 401 (e.g., 12 logical processor cores) and eight non-SMT physical processor cores of the second type 402, so 14 (6+8) physical processor cores but 20 (12+8) logical processor cores total for such a computer system 100, a trigger for SMT Core Isolation is checking if foreground application utilization (e.g., C0%) is between 100% usage of 1 thread to 100% usage of 14 threads with thread concurrency < 14 and sustained background activity, and if that check passed, then take appropriate action to park SMT siblings to improve foreground performance during concurrent workloads.

In certain examples, a trigger for SMT Core Isolation is checking if 100% of 1 thread < Foreground App utilization < 100% of (total # of physical cores, e.g., via MSR 0x35), and checking for sustained background activity, and if that check passed, then take appropriate action to park SMT siblings to improve foreground performance during concurrent workloads.

### SMT Core Isolation

In certain examples, upon determining to trigger SMT core isolation, SMT core isolation (e.g., disabling all but one logical core on a set of one or more SMT physical cores) is achieved by configuring platform specific trigger(s) and action(s). In certain examples, upon determining to trigger SMT core isolation, SMT core isolation (e.g., disabling all but one logical core on an SMT physical core) is achieved by updating a run time core parking configuration on the platform (e.g., computer system).

In certain examples, SMT core isolation is achieved by updating run time processor power management configuration settings (e.g., of an OS) to implement SMT core parking. In certain examples, such forced core parking of sibling logical processor cores of SMT physical processor cores is be achieved by limiting a number of logical processors (e.g., CPUs) available for scheduling, for example, by setting a corresponding value into a control value 164 of OS 160 (e.g., "CPMaxCores" value) (e.g., a processor power management (PPM) control value), e.g., a control value which denotes maximum % of unparked processors on the platform. In certain examples, this includes setting the control value 164 (e.g., CPMaxCores) = (# of Physical cores/ Total # of Threads) * 100.

Referring again to the example of a computer system 100 that includes six SMT physical processor cores of the first type 401 (e.g., 12 logical processor cores) and eight non-SMT physical processor cores of the second type 402, so 14 (6+8) physical processor cores but 20 (12+8) logical processor cores total for such a computer system 100, setting the control value 164 (e.g., CPMaxCores) to 70% = (14/20) * 100 will prevent the OS 160 (e.g., OS scheduler 162) from scheduling on the remaining 30% (i.e., 6) SMT siblings.

In certain examples, SMT core isolation (e.g., core parking) is implemented in via hardware, for example, thread runtime telemetry circuitry 116 (e.g., (i) Hardware Guide Scheduler (HGS) (or HGS+) circuitry or (ii) Thread Director circuitry). In certain examples, SMT core isolation (e.g., core parking) is implemented with hardware guided scheduling with a per-logical thread entry. In certain examples, the hardware is used to cause a hint (or other value) to be readable by the OS to avoid (e.g., not use) the SMT sibling cores (e.g., even though they were actually available to perform that work). In certain examples, the processor (e.g., via non-transitory machine-readable medium that stores power management code (e.g., p-code)) is to cause the thread runtime telemetry circuitry 116 (e.g., (i) Hardware Guide Scheduler (HGS) (or HGS+) circuitry or (ii) Thread Director circuitry) to implement SMT core isolation (e.g., core parking), e.g., by modifying values in hardware feedback data structure 250. Referring to FIG. 6, in certain examples if a SMT physical core implements logical processor (LP) (e.g., logical processor core) 0 and logical processor (LP) (e.g., logical processor core) 1, and it is desired to disable logical processor (LP) (e.g., logical processor core) 1 (and not disable LP 0), a corresponding write (e.g., of zero) is performed to the predicted performance capability (Perf Cap) and/or predicted energy efficiency capability (EE Cap) (e.g., in all classes or a subset of applicable classes) for the LP 1 row (the second row in the table in FIG. 6). In certain examples, an indication to use LP 0 may also be written to hardware feedback data structure 250 to fully enable (e.g., encourage) use of LP0, e.g., a corresponding write (e.g., of maximum value, e.g., 255) being performed to the predicted performance capability (Perf Cap) and/or predicted energy efficiency capability (EE Cap) (e.g., in all classes or a subset of applicable classes) for the LP 0 row (the first row in the table in FIG. 6).

The above discusses examples where a hardware feedback data structure 250 is used for telemetry data (e.g., capability values), however it should be understood that the telemetry data (e.g., capability values) may be sourced otherwise (e.g., directly from hybrid scaling predictor 240), e.g. and the telemetry data therefrom may be modified according to this disclosure to implement SMT core isolation (e.g., core parking).

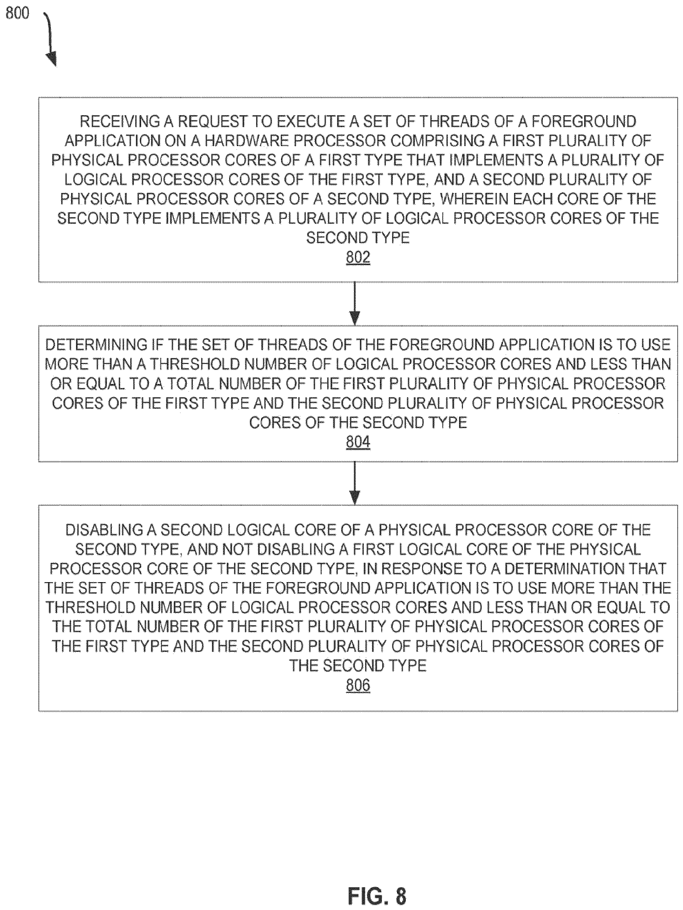

FIG. 8 is a flow diagram illustrating operations 800 of another method of performing dynamic simultaneous multi-threading (SMT) scheduling according to some examples. Some or all of the operations 800 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory.

The operations 800 include, at block 802, receiving a request to execute a set of threads of a foreground application on a hardware processor comprising a first plurality of physical processor cores of a first type that implements a plurality of logical processor cores of the first type, and a second plurality of physical processor cores of a second type, wherein each core of the second type implements a plurality of logical processor cores of the second type. The operations 800 further include, at block 804, determining if the set of threads of the foreground application is to use more than a threshold number of logical processor cores and less than or equal to a total number of the first plurality of physical processor cores of the first type and the second plurality of physical processor cores of the second type. The operations 800 further include, at block 806, disabling a second logical core of a physical processor core of the second type, and not disabling a first logical core of the physical processor core of the second type, in response to a determination that the set of threads of the foreground application is to use more than the threshold number of logical processor cores and less than or equal to the total number of the first plurality of physical processor cores of the first type and the second plurality of physical processor cores of the second type.

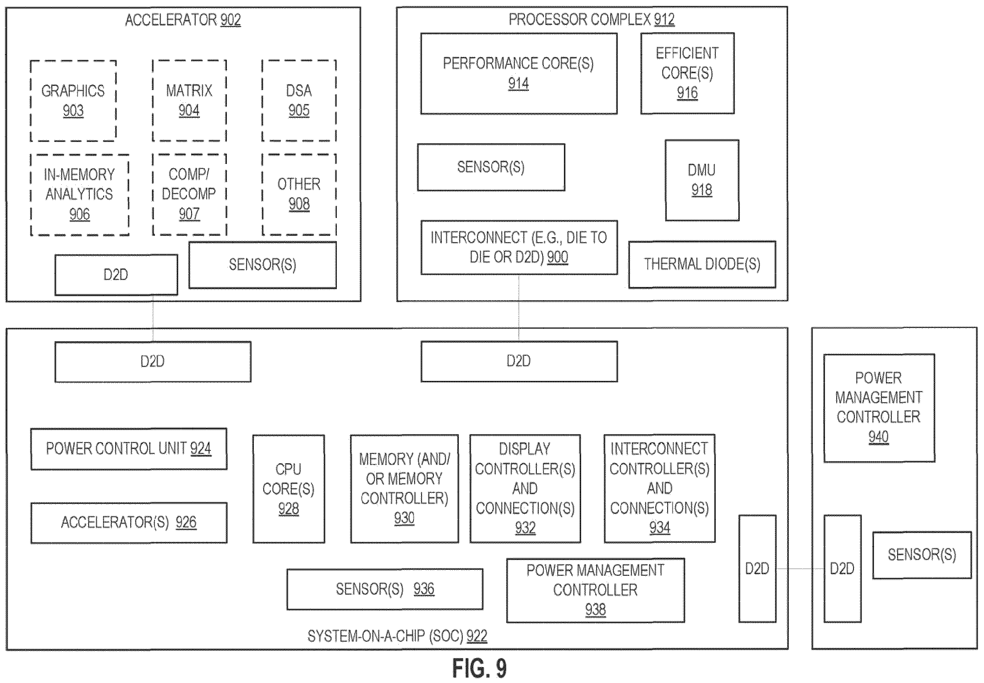

FIG. 9 illustrates examples of a processing apparatus. The processing apparatus includes at least one or more of a system-on-a-chip (SOC) 922, a processor complex 912, one or more accelerators 902, a power management controller 938 and/or 940, etc. In some examples, the above aspects are connected with die-to-die (D2D) interconnects 900. In some examples, some the SOC 922 includes additional components such as more cores, accelerators, etc. Note that the "boxes" for one or more accelerators 902, processor complex 912, and SOC 922, etc. could be redrawn. For example, one or more of the accelerators may be a part of the SOC 922 or processor complex 912, etc. (see, e.g., accelerator(s) 926).

The one or more accelerators 902 may include one or more of one or more graphical processing units (GPUs) 903, one or more matrix processing units 904, one or more data stream accelerators 905 (e.g., for storage networking, and or data-intensive workloads such as copying and transforming data), one or more in-memory analytics accelerators 906 (e.g., to perform compression and decompression along with analytics), one or more data encryption and compression accelerators 907, and/or other accelerators 908 that may include, but are not limited to vision, machine learning model specific hardware (e.g., an accelerator for a Transformer-based model), field programmable gate arrays (FPGAs), etc.

The processor complex 912 may include one or more performance cores 914 and one or more efficient cores 916. In some examples, the one or more performance cores 914 and one or more efficient cores 916 share an instruction set architecture. In some examples, the one or more performance cores 914 and one or more efficient cores 916 have differing instruction set architectures (although there may be some overlap). A DMU 918 (e.g., data management unit) runs "dcode" firmware and/or software may also be included.

The SoC 922 includes at least one or more of a power control unit 924 (PCU or punit) that runs pcode, one or more accelerators 926, one or more CPU cores 928 (e.g., efficient cores), a memory controller and/or memory 930, one or more display controllers and connections 932 (e.g., a display driver, ports, etc.), and/or one more interconnect controllers and/or connections.

Memory 930 stores an operating system in some examples. In some examples, memory 980 stores an operating system 982. Either instance of the OS includes an OS scheduler (e.g., OS scheduler 948).

One or more of the cores 928, 914, and/or 916 includes thread runtime telemetry circuitry such as thread runtime telemetry circuitry 116.

In some examples, a power management controller (e.g., power management controller (PMC) 938 or 940) controls the supply of power to components such as the processor cores, accelerators, etc. A PMC may have access to one or more storage devices to store information relating to operations of logic. The PMC may be coupled to a voltage regulator (VR) and/or other components of system (such as the cores). For example, the PMC may be coupled to receive information (e.g., in the form of one or more bits or signals) to indicate status of one or more sensors 936 (where the sensor(s) (e.g., thermal diodes) may be proximate to components of system (or other computing systems discussed herein), such as the cores interconnections, etc., to sense variations in temperature, operating frequency, operating voltage, power consumption, inter-core communication activity, etc.) and/or information from one or more power monitoring logics (e.g., which may indicate the operational status of various components of system such as operating temperature, operating frequency, operating voltage, operating status (e.g., active or inactive), power consumption (instantly or over a period of time), etc.). A PMC may instruct a VR, power source, and/or individual components of system to modify their operations. In an embodiment, variations may be sensed in such a way to account for leakage versus active power. For example, a PMC may indicate to the VR and/or power source to adjust their output. In some embodiments, a PMC may request the cores, etc. to modify their operating frequency, power consumption, etc. Note that the processor complex, accelerators, etc. may include a PMC. The PMC 938 or 940 may be a power management unit such as that shown in FIG. 1.

In some examples, at least a subset of the processor complex 912, SOC 922, and the one or more accelerators 902 share a unified memory (e.g., a shared virtual memory).

In existing systems, the frequency of the running cores was reduced to improve energy consumption at the cost of reduced performance. This approach does not shift performance-oriented tasks from efficient cores (e.g., cores 916 and/or 928) to performance cores (e.g., cores 914) as a function-efficiency preference.

On a hybrid architecture which contains multiple compute clusters (e.g., as shown in FIG. 9), such as P-cores and E-cores, typically the E-cores cluster is more efficient in terms of power/performance. When the preferred efficiency is biased towards energy, on a hybrid architecture, the pcode hints to the OS to schedule its performance-oriented tasks on an efficiency cluster (which contains E-cores) and by doing so, the performance is optimized. Examples detailed herein improves performance at the same energy consumption (when compared to previous generations) and therefore prolongs the operation time of device between battery charges or alternatively provides betters performance at the same battery life.

In the hybrid system shown in FIG. 9, there are at least two clusters: a performance cluster that contains high performance cores and an efficient cluster that contains high efficiency cores. The performance core cluster typically provides absolute higher performance vs. the efficiency cluster. Whereas the efficiency cluster consumes less energy for the same performance vs. the performance core cluster.

In effort to minimize SoC power consumption, based on current workload, in some systems, an efficient cluster (e.g., CPU cores 928) is activated and a performance cluster (e.g., processor complex 912 including a last-level cache (LLC)) is powered down. The efficient core cluster is expected to be the main compute module while the performance core cluster kicks in when high performance is required.

The performance core cluster is enabled when a high workload requires it and often in these cases, multiple threads should run. This poses a challenge of how to efficiently use all available resources.

### Apparatus and Method for Performance and Energy-efficient Compute

Implementations detailed herein add a capability to monitor (over time) the behavior of all work running on the compute IPs on the system, determine the compute capability required, and provide a hint to the operating system to consolidate all work on specific modules when that work runs better when contained on those specific modules. As described further below, the modules may be IP blocks such as clusters of performance cores (P-cores) and efficient cores (E-Cores). Note that in the performance cluster, the P-cores can be high performance cores, typically for single threaded workloads or energy-efficient cores like the ones in the efficient cluster, typically for multithread efficiency. As used herein, cores in the P-cluster are referred to as P-cores.

In addition to the telemetry and logic required to make these decisions, some examples create a new hint to be communicated to the OS to consolidate the work currently in the system onto a subset of the available compute modules. Examples extend the capabilities of providing the operating system with guidance on the optimal scheduling of the entire current set of active threads, rather than making suboptimal decisions at the individual thread level. As an example, consolidating the work that fits energy efficiently on the low power island on a product is expected to provide several 100mw lower power than would be achieved with existing scheduling hints and OS scheduler behavior. This substantially increases the energy efficiency of key classes of workloads.

In some examples, a power management unit (sometimes referred to as a "Punit" which executes PCODE) coordinates IP states to achieve lowest power state for the processor (e.g., in response to power and/or thermal issues) and exiting the lowest power state (e.g., after the low power and/or thermal issues are relaxed). Additionally, the SoC power management unit decides when throttling actions are to be engaged. In some examples, power management unit waits for a certain time between the action (wait time/hysteresis can be unique for each action) and/or can choose to observe the system power/temperature before measuring the impact of the last action before engaging the next action. Additionally, the power management unit may engage many actions in parallel in accordance with the corresponding PCODE.

To minimize SoC power consumption based on current workload, embodiments described herein dynamically activate an efficient cluster, such as the efficient core(s) 928 described above with respect to FIG. 9, and power off the performance core cluster, such as performance core(s) 914. In these embodiments, the efficient core cluster may be used as the primary compute circuitry while the performance core cluster is maintained in a low power state. The performance core cluster is activated only when high performance is required.

In some embodiments, a snoop filter (SF) in the home agent is inclusive to the efficient cluster and other devices holding coherent data. In addition, the SF tracks the cache lines shared with the performance cluster. The SF, however, is not inclusive to the performance cluster and it's large cache. This means that lookups that miss in the SF by the performance cluster will go directly to memory while other agents missing in the SF will still snoop the performance cluster.

The separation of the efficient core cluster and performance cluster allows complete powering off the performance core cluster and associated circuitry used by the performance core cluster. The HA is made aware of the powered off state, which allows the efficient core cluster to work without speculative snooping, which would otherwise consume significant power. In addition, the described architecture allows the efficient core cluster to contribute when processing multithreading tasks, working in concert with the performance core cluster.

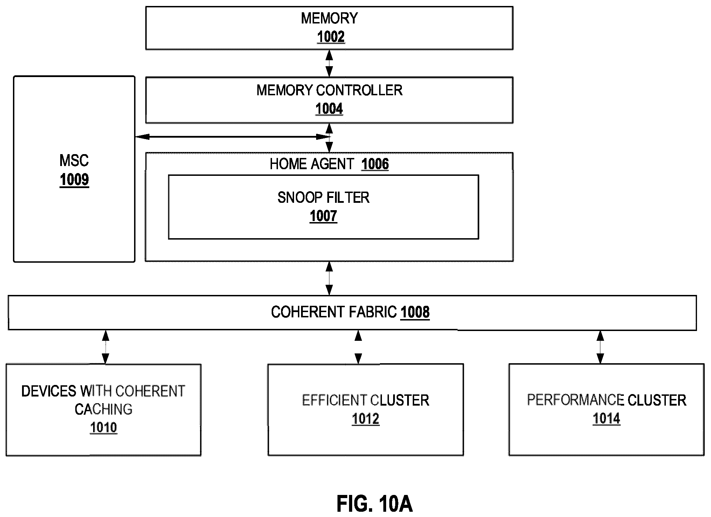

FIG. 10A illustrates examples of a system that supports performance and energy-efficient compute. In a traditional coherent system, when an agent is accessing a line, the coherent system registers it in a place or state visible to all other agents. Based on the request, the coherent system may perform various operations such as registering the line and its new state, sending snoops to other agents to check if they hold the line and, if so, performing further operations (e.g. invalidate /write to memory, etc.), and finally returning a message to the requesting agent that the line is now globally observed and therefore coherent.

In some examples, cores are clustered around a coherent fabric 1008. The efficient cluster 1012 and performance cluster 1014 are separated, either within the same compute die or on different compute dies of the multi-die package. The separation allows the performance cluster 1014 to be powered off while the efficient cluster 1012 remains active. In this configuration, the home agent 1006 is notified that the performance cluster 1014 is powered down, allowing the efficient cluster 1012 to work without speculative snooping in case of a miss in SF. In some examples, any (or most) circuitry not required by the efficient cluster 1012 is powered down, while providing the efficient cluster 1012 low latency access to memory 1002 via home agent 1006 and memory controller 1004. In some embodiments, a memory side cache (MSC) 1009 is integrated between the home agent 1006 and the memory controller 1004.

In some implementations, the memory 1002, or a portion thereof, comprises an on-package memory, integrated on the same processor package as the devices with coherent caching 1010, efficient cluster 1012, and performance cluster 1014. The memory 1002 may be a DRAM (e.g., DDR4, DDR5, etc) or other volatile or non-volatile memory type. Note that in some implementations, at least some of the devices with coherent caching 1010 may be external to the processor package and accessible via a cache coherent IO interface (e.g., such as a CXL.mem interface).

The home agent (HA) 1006 interfaces with the memory controller 1004, and ensures memory/cache coherency. The HA 1006 uses a snoop filter (SF) 1007 to broadcast snoops to peer caching agents, as well as maintaining a memory directory to track the current states of cache lines. As coherency resolution is time consuming, the snoop filter 1007 holds an indication of some cache line states in an efficient location and attempts to reduce the number of snoops.

The SF 1007 in the HA 1006 is inclusive to the caches of the efficient cluster 1012 and the devices with coherent caching 1010. The home agent 1006 tracks performance cluster cache lines only if they are shared with other agents (e.g., agents of the devices with coherent caching 1010 and agents of the efficient cluster 1012). For example, certain internal devices with coherent caching 1010, such as a graphics processor, may locally store coherent cache lines.

The coherent fabric 1008 routes all agent memory transactions to the home agent 1006 which resolves coherency before accessing memory 1002. The snoop filter 1007 is made inclusive to the devices with coherent caching 1010 and the efficient cluster 1012 so that the performance cluster 1014 transactions to memory 1002 are not delayed by snoops unless the data is cached in another coherent agent. This optimizes latency and therefore performance as speculative snoops are not sent.

The architecture can be scalable to more compute clusters and agents as well as providing flexibility when placing those agents and their corresponding power rails. Memory latency for the performance cluster 1014 is reduced as compared with other options as only a snoop filter 1007 lookup is required. This arrangement also allows more convenient power rail separation, power gating, and SoC management for the various IP blocks.

The SoC may enter an energy efficient mode due to power and/or thermal constraints or when the current workload can be processed at an acceptable performance level by the efficiency cluster 1012. When In an energy efficient mode, the performance cluster 1014 may be powered off and the home agent 1006 is made aware of the powered off state so no snoops will be sent to the performance cluster 1014. The SF 1007 continues to resolve coherency for the efficient cluster 1012 and/or devices with coherent caching 1010 while the performance cluster 1014 is powered off. Typically, very few snoops occur (e.g., when two or more agents share data) which is power and latency efficient.

When the power and/or thermal limitations are resolved or when the workload changes such that it cannot be processed adequately by the efficiency cluster 1012 alone, the performance cluster 1014 may be activated. When the performance cluster 1014 is active, it snoops other agents only if the line is in the SF 1007, which is latency efficient. In some implementations, when the performance cluster 1014 is active, the efficient cluster 1012 and other agents send snoops to the performance cluster 1014 for every transaction not already in the SF 1007. This is done because the large cache in the performance cluster 1014 is not fully tracked in the SF 1007; rather, only shared cache lines are tracked in some implementations.

**Table A: lookup miss behavior.**

| **Mode/SF 1007 lookup with** | **Performance cluster 1014** | **Efficient cluster 1012 / Coherent devices 1010** |
|---|---|---|
| Performance cluster off | NA | Lookup miss in SF 1007: update SF 1007 based on |
| | | transaction type, fetch from memory |
| Performance cluster on | Snoop if SF 1007 hit, update SF 1007 based on transaction type | Lookup miss in SF 1007: snoop performance cluster 1014. If snoop miss, get line from memory(1). If hit, get line from performance cluster, update SF 1007 based on transaction type |

Based on performance, the system may decide to issue a speculative memory fetch in parallel to snooping the performance cluster. This way, in the likely case of a snoop miss in the performance cluster, the memory fetch will not be delayed while, in case of hit, the memory fetch will be dropped. In any case, where the lookup hit in the SF 1007, the SF is updated based on transaction type and retrieves the cache line if needed.

As mentioned, the snoop filter 1007 is inclusive to devices with coherent caching 1010 and the efficient cores cluster 1012, so the performance cluster 1014 transactions are not delayed, and snoops are sent only when data is cached in another coherent agent. With the performance core cluster off, snoops are performed on snoop filter 1007 hits and the snoop filter is updated in accordance with the transaction type. When the performance core cluster is on, the performance core cluster snoops on snoop filter 1007 hits based on the transaction type. The efficient cluster 1012 and devices with coherent caching 1010 snoop on a snoop filter 1007 hit and snoop the performance core cluster caches on a snoop filter miss. In either case, the snoop filter is updated in accordance with the transaction type.

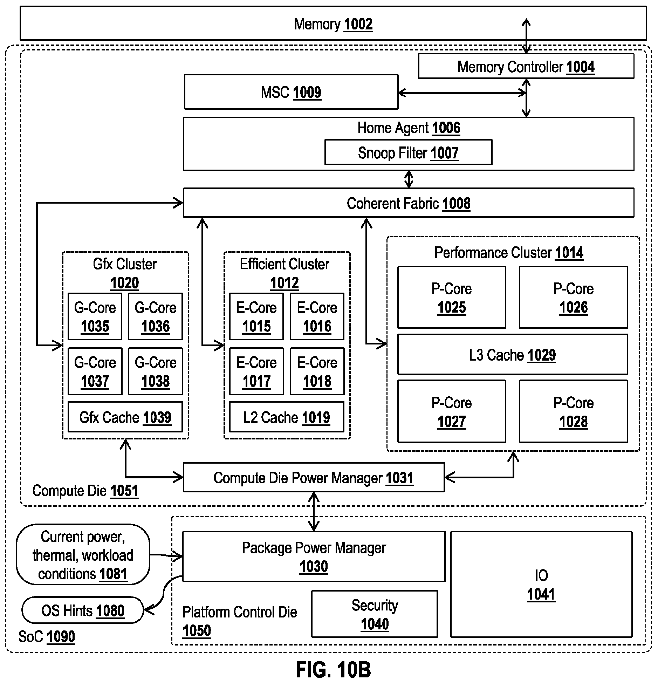

FIG. 10B illustrates additional details for an example SoC 1090 comprising a compute die 1051 coupled to a platform control die 1050. The compute die 1051 includes the coherent fabric 1008, home agent 1006 with snoop filter 1007, and memory controller 1004 for accessing memory 1002 as described with respect to FIG. 10A. In the illustrated example, the compute die 1051 comprises a graphics cluster 1020 as well as the efficiency core cluster 1012 and performance cluster 1014. Various other IP blocks may be included on the compute die and may participate in the techniques described herein, such as a neural processing unit (NPU) for performing machine-learning based operations such as matrix operations. In addition, various cache levels and types may be employed in accordance with the principles described herein, including a system-level cache (e.g., an L4 cache) and a memory side cache (MSC).

The graphics cluster 1020 comprises a set of graphics cores 1035-1038 and a graphics cache 1039 (e.g., an L2 cache) which coherently stores cache lines accessed from memory 1002 in accordance with the inclusive cache line tracking performed by the snoop filter 1007. The efficiency core cluster 1012 includes a set of E-cores 1015-1018 and an L2 cache 1019 shared by the E-cores and the performance cluster 1014 includes a set of P-cores 1025-1028, may include E-cores for high multi threading and an L3 cache 1029 shared by these cores.

The compute die 1051 also includes a compute die power manager 1031 for causing the P-core cluster 1014 to enter and exit from low power states as described herein. In this implementation, the compute die power manager 1031 is communicatively coupled to a package power manager 1030 on the platform control die 1050, which makes package-wide power management decisions based (in part) on current power, thermal, and workload conditions 1081 and responsively communicates information related to power/performance states to the compute die power manager 1031. For example, based on the information received from the package power manager 1030, the compute die power manager 1031 may select power/performance states for the various clusters 1020, 1012, 1014, including powering off the performance cluster 1014 in response to power, thermal, or workload conditions 1081. For example, the compute die power manager 1031 may power off the performance cluster 1014 upon a determination that the current workload can be processed on the efficiency cluster 1012 at an acceptable performance level. In addition, the compute die power manager 1031 may throttle one or more of the cores of the various clusters 1020, 1012, 1014 as needed (e.g., reducing per-core frequencies and/or voltages to reduce power and/or temperature when necessary).

In some implementation, the package power manager 1030 may generate one or more OS hints 1080, in effect, requesting consolidation of threads of currently executing workloads on the efficient cluster 1012. Once the OS consolidates the threads to the efficient cluster 1012, the compute die power manager 1031 may power off the performance cluster 1014.

The platform control die 1050 also includes security circuitry 1040 for securing cross-die and off-die transactions, and IO circuitry 1041, such as PCIe links, Ethernet links, and WiFi links. Each of the circuit blocks of the platform control die 1050 may be controlled by signals from the package power manager 1030 in accordance with current power/thermal constraints.

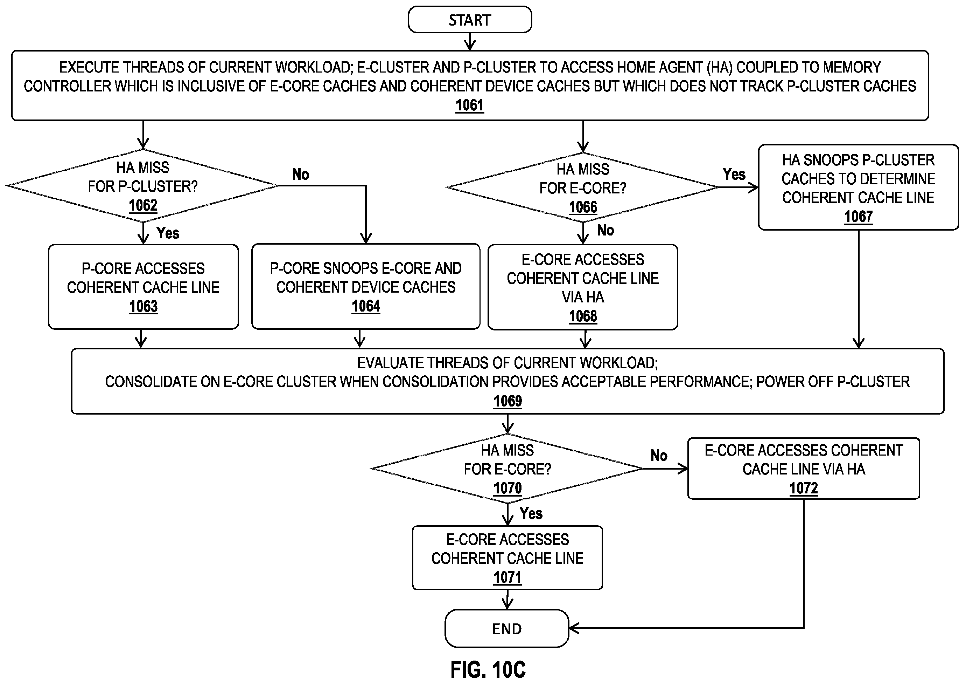

A method in accordance with some implementations of the invention is illustrated in FIG. 10C. The method may be performed on the various processor and system architectures described herein, but is not limited to any specific architecture.

At 1061, threads of a current workload are executed on E-cluster and P-cluster, which rely on a home agent coupled to the memory controller to ensure cache line coherency. The home agent includes a snoop filter which is inclusive of the E-cluster caches and coherent device caches (e.g., graphics cache 1039) but does not track cache lines in the P-cluster caches.

Thus, in response to a home agent miss for a P-cluster at 1062, the P-core can access the coherent cache line from the cache/memory subsystem (i.e., because it is not stored in any E-Core cache or coherent device cache). In response to a home agent hit, at 1064, the P-core snoops the E-cluster via the HA and/or coherent device caches to ensure coherency of the cache line.

In response to a home agent miss for an E-core at 1066, the HA snoops the performance cluster caches at 1067 to ensure it is accessing a coherent cache line. In response to a hit at the P-cluster, the E-core accesses the coherent cache line via the home agent 1068 based on indication in SF for which caching agent/s has the line.

At 1069, the threads of the current workload are evaluated. The threads are consolidated on the E-core cluster when consolidation provides acceptable performance. The P-cluster is then powered off (e.g., power gated).

At 1070, in response to a home agent miss for an E-core, the P-cluster caches no longer need to be snooped (because the P-cluster, including the caches are powered down). Thus at 1071, the E-core accesses the coherent cache line from the memory subsystem. In response to hit in the home agent snoop filter, the E-core accesses the coherent cache line via the home agent at 1072 based on indication in SF for which caching agent/s has the line.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

FIG. 11 illustrates an example computing system. Multiprocessor system 1100 is an interfaced system and includes a plurality of processors or cores including a first processor 1170 and a second processor 1180 coupled via an interface 1150 such as a point-to-point (P-P) interconnect, a fabric, and/or bus. In some examples, the first processor 1170 and the second processor 1180 are homogeneous. In some examples, first processor 1170 and the second processor 1180 are heterogenous. Though the example multiprocessor system 1100 is shown to have two processors, the system may have three or more processors, or may be a single processor system. In some examples, the computing system is a system on a chip (SoC).

Processors 1170 and 1180 are shown including integrated memory controller (IMC) circuitry 1172 and 1182, respectively. Processor 1170 also includes interface circuits 1176 and 1178; similarly, second processor 1180 includes interface circuits 1186 and 1188. Processors 1170, 1180 may exchange information via the interface 1150 using interface circuits 1178, 1188. IMCs 1172 and 1182 couple the processors 1170, 1180 to respective memories, namely a memory 1132 and a memory 1134, which may be portions of main memory locally attached to the respective processors.

Processors 1170, 1180 may each exchange information with a network interface (NW I/F) 1190 via individual interfaces 1152, 1154 using interface circuits 1176, 1194, 1186, 1198. The network interface 1190 (e.g., one or more of an interconnect, bus, and/or fabric, and in some examples is a chipset) may optionally exchange information with a co-processor 1138 via an interface circuit 1192. In some examples, the co-processor 1138 is a special-purpose processor, such as, for example, a high-throughput processor, a network or communication processor, a compression engine, a graphics processor, a general purpose graphics processing unit (GPGPU), a neural-network processing unit (NPU), an embedded processor, a security processor, a cryptographic accelerator, a matrix accelerator, an in-memory analytics accelerator, , a data streaming accelerator, data graph operations, or the like.

A shared cache (not shown) may be included in either processor 1170, 1180 or outside of both processors, yet connected with the processors via an interface such as P-P interconnect, such that either or both processors' local cache information may be stored in the shared cache if a processor is placed into a low power mode.

Network interface 1190 may be coupled to a first interface 1116 via interface circuit 1196. In some examples, first interface 1116 may be an interface such as a Peripheral Component Interconnect (PCI) interconnect, a PCI Express interconnect or another I/O interconnect. In some examples, first interface 1116 is coupled to a power control unit (PCU) 1117, which may include circuitry, software, and/or firmware to perform power management operations with regard to the processors 1170, 1180 and/or co-processor 1138. PCU 1117 provides control information to a voltage regulator (not shown) to cause the voltage regulator to generate the appropriate regulated voltage. PCU 1117 also provides control information to control the operating voltage generated. In various examples, PCU 1117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1117 is illustrated as being present as logic separate from the processor 1170 and/or processor 1180. In other cases, PCU 1117 may execute on a given one or more of cores (not shown) of processor 1170 or 1180. In some cases, PCU 1117 may be implemented as a microcontroller (dedicated or general-purpose) or other control logic configured to execute its own dedicated power management code, sometimes referred to as P-code. In yet other examples, power management operations to be performed by PCU 1117 may be implemented externally to a processor, such as by way of a separate power management integrated circuit (PMIC) or another component external to the processor. In yet other examples, power management operations to be performed by PCU 1117 may be implemented within BIOS or other system software.

Various I/O devices 1114 may be coupled to first interface 1116, along with a bus bridge 1118 which couples first interface 1116 to a second interface 1120. In some examples, one or more additional processor(s) 1115, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1116. In some examples, second interface 1120 may be a low pin count (LPC) interface. Various devices may be coupled to second interface 1120 including, for example, a keyboard and/or mouse 1122, communication devices 1127 and storage circuitry 1128. Storage circuitry 1128 may be one or more non-transitory machine-readable storage media as described below, such as a disk drive or other mass storage device which may include instructions/code and data 1130 and may implement the storage 'ISAB03 in some examples. Further, an audio I/O 1124 may be coupled to second interface 1120. Note that other architectures than the point-to-point architecture described above are possible. For example, instead of the point-to-point architecture, a system such as multiprocessor system 1100 may implement a multi-drop interface or other such architecture.

### Example Core Architectures, Processors, and Computer Architectures

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a co-processor including one or more special purpose cores intended primarily for graphics and/or scientific (throughput) computing. Such different processors lead to different computer system architectures, which may include: 1) the co-processor on a separate chip from the CPU; 2) the co-processor on a separate die in the same package as a CPU; 3) the co-processor on the same die as a CPU (in which case, such a co-processor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described co-processor, and additional functionality. Example core architectures are described next, followed by descriptions of example processors and computer architectures.

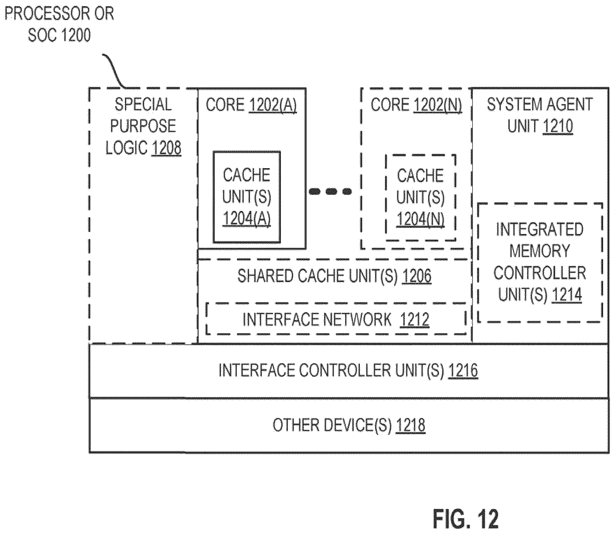

FIG. 12 illustrates a block diagram of an example processor and/or SoC 1200 that may have one or more cores and an integrated memory controller. The solid lined boxes illustrate a processor and/or SoC 1200 with a single core 1202(A), system agent unit circuitry 1210, and a set of one or more interface controller unit(s) circuitry 1216, while the optional addition of the dashed lined boxes illustrates an alternative processor and/or SoC 1200 with multiple cores 1202(A)-(N), a set of one or more integrated memory controller unit(s) circuitry 1214 in the system agent unit circuitry 1210, and special purpose logic 1208, as well as a set of one or more interface controller unit(s) circuitry 1216. Note that the processor and/or SoC 1200 may be one of the processors 1170 or 1180, or co-processor 1138 or 1115 of FIG. 11.

Thus, different implementations of the processor and/or SoC 1200 may include: 1) a CPU with the special purpose logic 1208 being a high-throughput processor, a network or communication processor, a compression engine, a graphics processor, a general purpose graphics processing unit (GPGPU), a neural-network processing unit (NPU), an embedded processor, a security processor, a matrix accelerator, an in-memory analytics accelerator, a compression accelerator, a data streaming accelerator, data graph operations, or the like (which may include one or more cores, not shown), and the cores 1202(A)-(N) being one or more general purpose cores (e.g., general purpose in-order cores, general purpose out-of-order cores, or a combination of the two); 2) a co-processor with the cores 1202(A)-(N) being a large number of special purpose cores intended primarily for graphics and/or scientific (throughput); and 3) a co-processor with the cores 1202(A)-(N) being a large number of general purpose in-order cores. Thus, the processor and/or SoC 1200 may be a general-purpose processor, co-processor or special-purpose processor, such as, for example, a network or communication processor, compression engine, graphics processor, GPGPU (general purpose graphics processing unit), a high throughput many integrated core (MIC) co-processor (including 30 or more cores), embedded processor, or the like. The processor may be implemented on one or more chips. The processor and/or SoC 1200 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1204(A)-(N) within the cores 1202(A)-(N), a set of one or more shared cache unit(s) circuitry 1206, and external memory (not shown) coupled to the set of integrated memory controller unit(s) circuitry 1214. The set of one or more shared cache unit(s) circuitry 1206 may include one or more mid-level caches, such as level 2 (L2), level 3 (L3), level 4 (L4), or other levels of cache, such as a last level cache (LLC), and/or combinations thereof. While in some examples interface network circuitry 1212 (e.g., a ring interconnect) interfaces the special purpose logic 1208 (e.g., integrated graphics logic), the set of shared cache unit(s) circuitry 1206, and the system agent unit circuitry 1210, alternative examples use any number of well-known techniques for interfacing such units. In some examples, coherency is maintained between one or more of the shared cache unit(s) circuitry 1206 and cores 1202(A)-(N). In some examples, interface controller unit(s) circuitry 1216 couple the cores 1202(A)-(N) to one or more other devices 1218 such as one or more I/O devices, storage, one or more communication devices (e.g., wireless networking, wired networking, etc.), etc.

In some examples, one or more of the cores 1202(A)-(N) are capable of multi-threading. The system agent unit circuitry 1210 includes those components coordinating and operating cores 1202(A)-(N). The system agent unit circuitry 1210 may include, for example, power control unit (PCU) circuitry and/or display unit circuitry (not shown). The PCU may be or may include logic and components needed for regulating the power state of the cores 1202(A)-(N) and/or the special purpose logic 1208 (e.g., integrated graphics logic). The display unit circuitry is for driving one or more externally connected displays.

The cores 1202(A)-(N) may be homogenous in terms of instruction set architecture (ISA). Alternatively, the cores 1202(A)-(N) may be heterogeneous in terms of ISA; that is, a subset of the cores 1202(A)-(N) may be capable of executing an ISA, while other cores may be capable of executing only a subset of that ISA or another ISA.

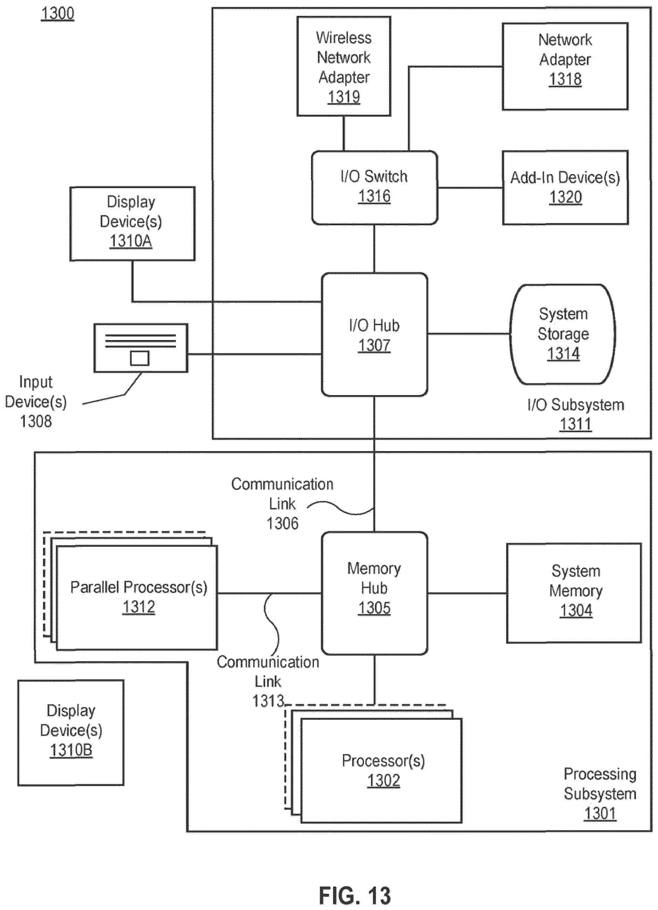

FIG. 13 is a block diagram illustrating a computing system 1300 configured to implement one or more aspects of the examples described herein. The computing system 1300 includes a processing subsystem 1301 having one or more processor(s) 1302 and a system memory 1304 communicating via an interconnection path that may include a memory hub 1305. The memory hub 1305 may be a separate component within a chipset component or may be integrated within the one or more processor(s) 1302. The memory hub 1305 couples with an I/O subsystem 1311 via a communication link 1306. The I/O subsystem 1311 includes an I/O hub 1307 that can enable the computing system 1300 to receive input from one or more input device(s) 1308. Additionally, the I/O hub 1307 can enable a display controller, which may be included in the one or more processor(s) 1302, to provide outputs to one or more display device(s) 1310A. In some examples the one or more display device(s) 1310A coupled with the I/O hub 1307 can include a local, internal, or embedded display device.

The processing subsystem 1301, for example, includes one or more parallel processor(s) 1312 coupled to memory hub 1305 via a bus or communication link 1313. The communication link 1313 may be one of any number of standards-based communication link technologies or protocols, such as, but not limited to PCI Express, or may be a vendor specific communications interface or communications fabric. The one or more parallel processor(s) 1312 may form a computationally focused parallel or vector processing system that can include a large number of processing cores and/or processing clusters, such as a many integrated core (MIC) processor. For example, the one or more parallel processor(s) 1312 form a graphics processing subsystem that can output pixels to one of the one or more display device(s) 1310A coupled via the I/O hub 1307. The one or more parallel processor(s) 1312 can also include a display controller and display interface (not shown) to enable a direct connection to one or more display device(s) 1310B.

Within the I/O subsystem 1311, a system storage unit 1314 can connect to the I/O hub 1307 to provide a storage mechanism for the computing system 1300. An I/O switch 1316 can be used to provide an interface mechanism to enable connections between the I/O hub 1307 and other components, such as a network adapter 1318 and/or wireless network adapter 1319 that may be integrated into the platform, and various other devices that can be added via one or more add-in device(s) 1320. The add-in device(s) 1320 may also include, for example, one or more external graphics processor devices, graphics cards, and/or compute accelerators. The network adapter 1318 can be an Ethernet adapter or another wired network adapter. The wireless network adapter 1319 can include one or more of a Wi-Fi, Bluetooth, near field communication (NFC), or other network device that includes one or more wireless radios.

The computing system 1300 can include other components not explicitly shown, including USB or other port connections, optical storage drives, video capture devices, and the like, which may also be connected to the I/O hub 1307. Communication paths interconnecting the various components in FIG. 13 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1312 may incorporate circuitry optimized for graphics and video processing, including, for example, video output circuitry, and constitutes a graphics processing unit (GPU). Alternatively or additionally, the one or more parallel processor(s) 1312 can incorporate circuitry optimized for general purpose processing, while preserving the underlying computational architecture, described in greater detail herein. Components of the computing system 1300 may be integrated with one or more other system elements on a single integrated circuit. For example, the one or more parallel processor(s) 1312, memory hub 1305, processor(s) 1302, and I/O hub 1307 can be integrated into a system on chip (SoC) integrated circuit. Alternatively, the components of the computing system 1300 can be integrated into a single package to form a system in package (SIP) configuration. In some examples at least a portion of the components of the computing system 1300 can be integrated into a multi-chip module (MCM), which can be interconnected with other multi-chip modules into a modular computing system.

It will be appreciated that the computing system 1300 shown herein is illustrative and that variations and modifications are possible. The connection topology, including the number and arrangement of bridges, the number of processor(s) 1302, and the number of parallel processor(s) 1312, may be modified as desired. For instance, system memory 1304 can be connected to the processor(s) 1302 directly rather than through a bridge, while other devices communicate with system memory 1304 via the memory hub 1305 and the processor(s) 1302. In other alternative topologies, the parallel processor(s) 1312 are connected to the I/O hub 1307 or directly to one of the one or more processor(s) 1302, rather than to the memory hub 1305. In other examples, the I/O hub 1307 and memory hub 1305 may be integrated into a single chip. It is also possible that two or more sets of processor(s) 1302 are attached via multiple sockets, which can couple with two or more instances of the parallel processor(s) 1312.

Some of the particular components shown herein are optional and may not be included in all implementations of the computing system 1300. For example, any number of add-in cards or peripherals may be supported, or some components may be eliminated. Furthermore, some architectures may use different terminology for components similar to those illustrated in FIG. 13. For example, the memory hub 1305 may be referred to as a Northbridge in some architectures, while the I/O hub 1307 may be referred to as a Southbridge.

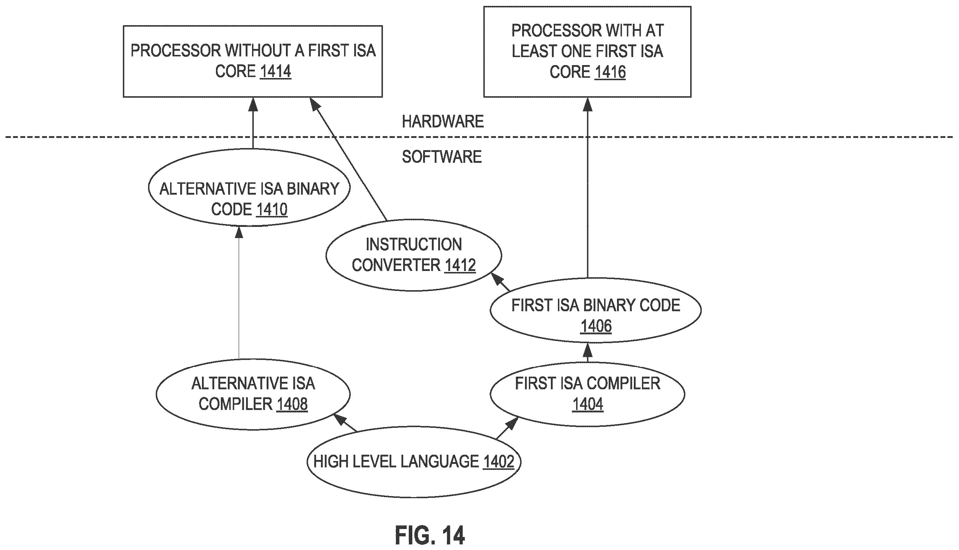

FIG. 14 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 14 shows a program in a high-level language 1402 may be compiled using a first ISA compiler 1404 to generate first ISA binary code 1406 that may be natively executed by a processor with at least one first ISA core 1416. The processor with at least one first ISA core 1416 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1404 represents a compiler that is operable to generate first ISA binary code 1406 (e.g., object code) that can, with or without additional linkage processing, be executed on the processor with at least one first ISA core 1416. Similarly, FIG. 14 shows the program in the high-level language 1402 may be compiled using an alternative ISA compiler 1408 to generate alternative ISA binary code 1410 that may be natively executed by a processor without a first ISA core 1414. The instruction converter 1412 is used to convert the first ISA binary code 1406 into code that may be natively executed by the processor without a first ISA core 1414. This converted code is not necessarily to be the same as the alternative ISA binary code 1410; however, the converted code will accomplish the general operation and be made up of instructions from the alternative ISA. Thus, the instruction converter 1412 represents software, firmware, hardware, or a combination thereof that, through emulation, simulation or any other process, allows a processor or other electronic device that does not have a first ISA processor or core to execute the first ISA binary code 1406.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

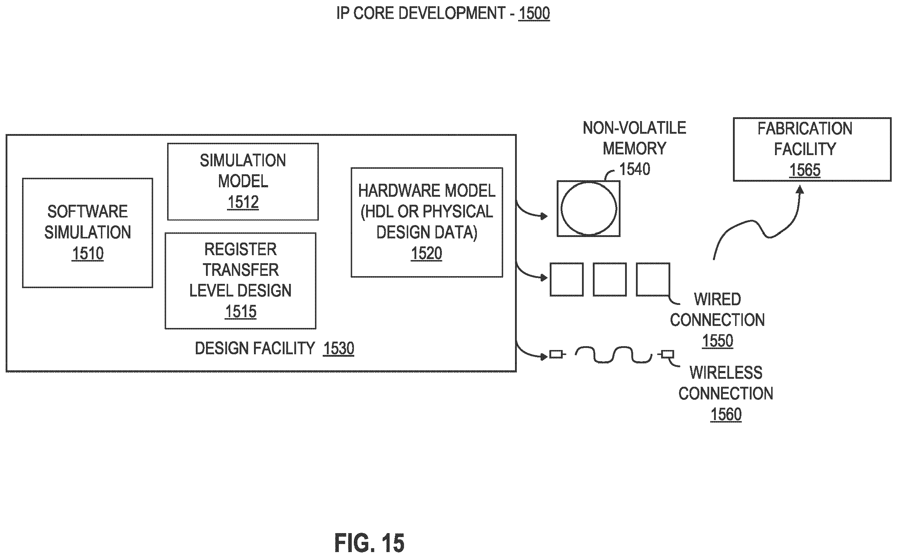

FIG. 15 is a block diagram illustrating an IP core development system 1500 that may be used to manufacture an integrated circuit to perform operations according to some examples. The IP core development system 1500 may be used to generate modular, re-usable designs that can be incorporated into a larger design or used to construct an entire integrated circuit (e.g., an SOC integrated circuit). A design facility 1530 can generate a software simulation 1510 of an IP core design in a high-level programming language (e.g., C/C++). The software simulation 1510 can be used to design, test, and verify the behavior of the IP core using a simulation model 1512. The simulation model 1512 may include functional, behavioral, and/or timing simulations. A register transfer level (RTL) design 1515 can then be created or synthesized from the simulation model 1512. The RTL design 1515 is an abstraction of the behavior of the integrated circuit that models the flow of digital signals between hardware registers, including the associated logic performed using the modeled digital signals. In addition to an RTL design 1515, lower-level designs at the logic level or transistor level may also be created, designed, or synthesized. Thus, the particular details of the initial design and simulation may vary.

The RTL design 1515 or equivalent may be further synthesized by the design facility into a hardware model 1520, which may be in a hardware description language (HDL), or some other representation of physical design data. The HDL may be further simulated or tested to verify the IP core design. The IP core design can be stored for delivery to a fabrication facility 1565 using non-volatile memory 1540 (e.g., hard disk, flash memory, or any non-volatile storage medium). Alternatively, the IP core design may be transmitted (e.g., via the Internet) over a wired connection 1550 or wireless connection 1560. The fabrication facility 1565 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the scope of the present invention as defined by the claims.

## Claims

1. A processor package comprising:
a plurality of dies including a first die and a second die, the first die (1051) comprising:
an efficient core cluster (1012) comprising:
a first plurality of cores (1015-1018) operable in accordance with first power and performance characteristics, and
a first one or more caches (1019);
a performance core cluster (1014) comprising:
a second plurality of cores (1025-1028) operable in accordance with second power and performance characteristics different from the first power and performance characteristics, and
a second one or more caches (1029);
a memory controller (1004) to couple the efficient core cluster and the performance core cluster to a memory (1002);
a home agent (1006) including a snoop filter (1007) to track states of cache lines stored in the first one or more caches but not the second one or more caches;
wherein responsive to a request for a first cache line originating from the performance core cluster which hits the snoop filter, the home agent is to snoop at least one of the first one or more caches to ensure coherency of the first cache line; and
wherein responsive to a request for a second cache line originating from the efficient core cluster which misses the snoop filter, the home agent is to snoop at least one of the second one or more caches to ensure coherency of the second cache line.

2. The processor package of claim 1, wherein responsive to a request for a third cache line originating from the performance core cluster which misses the snoop filter, the third cache line is to be accessed from memory via the memory controller.

3. The processor package of claim 1 or 2, wherein responsive to a request for a fourth cache line originating from the efficient core cluster which hits the snoop filter, the home agent is to snoop the first one or more caches to ensure coherency of the fourth cache line.

4. The processor package of any of claims 1 to 3, further comprising:
management circuitry (1031) integral to one or more of the plurality of dies to cause the performance core cluster, including the second plurality of cores and the second one or more caches to be powered off responsive to a determination that threads of a current workload can be consolidated on the first plurality of cores.

5. The processor package of claim 4, wherein responsive to a request for a third cache line originating from the efficient core cluster which misses the snoop filter, the third cache line is to be accessed from memory via the memory controller.

6. The processor package of claim 4, wherein the management circuitry (1031) is to determine that the threads of the current workload can be consolidated on the first plurality of cores based on characteristics of the threads in view of a minimum required performance metric.

7. The processor package of any of claims 1 to 6, further comprising:
a device (1010) with one or more coherent caches;
wherein responsive to a request for a third cache line originating from the efficient core cluster which hits the snoop filter, the home agent is to snoop at least one of the one or more coherent caches to ensure coherency of the third cache line.

8. The processor package of claim 7, wherein the device comprises a graphics processor or a neural processing unit.

9. The processor package of any of claims 4 to 8, wherein the management circuitry (1031) comprises first management circuitry integral to the first die (1051), the processor package further comprising:
a platform control die (1050) of the plurality of dies, the platform control die comprising:
a plurality of input-output interfaces (1041) to couple to a plurality of input-output devices; and
second management circuitry (1030) to perform package-wide management operations.

10. The processor package of any of claims 1 to 9, further comprising:
an on-package memory coupled to the memory controller.

11. A method, comprising:
executing (1061) threads of a current workload on an efficient core cluster (1012) and a performance core cluster (1014), the efficient core cluster comprising:
a first plurality of cores operable in accordance with first power and performance characteristics, and
a first one or more caches; and
the performance core cluster comprising:
a second plurality of cores operable in accordance with second power and performance characteristics different from the first power and performance characteristics, and
a second one or more caches;
tracking states of cache lines by a snoop filter of a home agent, the cache lines stored in the first one or more caches but not the second one or more caches;
snooping (1064) at least one of the first one or more caches by the home agent responsive to a request for a first cache line originating from the performance core cluster which hits the snoop filter; and
snooping (1067) at least one of the second one or more caches by the home agent responsive to a request for a second cache line originating from the efficient core cluster which misses the snoop filter.

12. The method of claim 11, wherein responsive to a request for a third cache line originating from the performance core cluster which misses the snoop filter, the third cache line is to be accessed (1063) from memory via a memory controller.

13. The method of claims 11 or 12, wherein responsive to a request for a fourth cache line originating from the efficient core cluster which hits the snoop filter, the home agent is to snoop (1068) the first one or more caches to ensure coherency of the fourth cache line.

14. The method of any of claims 11 to 13, further comprising:
causing (1069) the performance core cluster, including the second plurality of cores and the second one or more caches to be powered off responsive to a determination that threads of a current workload can be consolidated on the first plurality of cores.

15. A machine-readable medium having program code stored thereon which, when executed by a processor, is to cause the processor to perform the method of any of claims 11 to 14.

## Patentansprüche

1. Prozessorgehäuse, das Folgendes umfasst:
eine Mehrzahl von Dies, die einen ersten Die und einen zweiten Die aufweisen, wobei der erste Die (1051) Folgendes umfasst:
einen effizienten Kerncluster (1012), der Folgendes umfasst:
eine erste Mehrzahl von Kernen (1015-1018), die gemäß ersten Strom- und Leistungsmerkmalen betriebsfähig sind, und
einen oder mehrere erste Caches (1019);
einen Leistungskerncluster (1014), der Folgendes umfasst:
eine zweite Mehrzahl von Kernen (1025-1028), die gemäß zweiten Strom- und Leistungsmerkmalen betriebsfähig sind, die sich von den ersten Strom- und Leistungsmerkmalen unterscheiden, und
einen oder mehrere zweite Caches (1029);
einen Speicher-Controller (1004) zum Koppeln des effizienten Kernclusters und des Leistungskernclusters mit einem Speicher (1002);
einen Home-Agenten (1006), der ein Snoop-Filter (1007) zum Verfolgen von Zuständen von Cache-Zeilen aufweist, die in dem einen oder den mehreren ersten Caches, aber nicht in dem einen oder den mehreren zweiten Caches gespeichert sind;
wobei als Reaktion auf eine Anforderung für eine erste Cache-Zeile, die von dem Leistungskerncluster stammt, der auf das Snoop-Filter trifft, der Home-Agent mindestens einen des einen oder der mehreren ersten Caches snoopen soll, um Kohärenz der ersten Cache-Zeile sicherzustellen; und
wobei als Reaktion auf eine Anforderung für eine zweite Cache-Zeile, die von dem effizienten Kerncluster stammt, der das Snoop-Filter verfehlt, der Home-Agent mindestens einen des einen oder der mehreren zweiten Caches snoopen soll, um Kohärenz der zweiten Cache-Zeile sicherzustellen.

2. Prozessorgehäuse nach Anspruch 1, wobei als Reaktion auf eine Anforderung für eine dritte Cache-Zeile, die von dem Leistungskerncluster stammt, der das Snoop-Filter verfehlt, auf die dritte Cache-Zeile aus dem Speicher über den Speicher-Controller zugegriffen werden soll.

3. Prozessorgehäuse nach Anspruch 1 oder 2, wobei der Home-Agent als Reaktion auf eine Anforderung für eine vierte Cache-Zeile, die von dem effizienten Kerncluster stammt, der auf das Snoop-Filter trifft, den einen oder die mehreren ersten Caches zu snoopen hat, um Kohärenz der vierten Cache-Zeile sicherzustellen.

4. Prozessorgehäuse nach einem der Ansprüche 1 bis 3, das ferner Folgendes umfasst:
eine Verwaltungsschaltung (1031), die integral mit einem oder mehreren der Mehrzahl von Dies ist, um zu bewirken, dass der Leistungskerncluster, einschließlich der zweiten Mehrzahl von Kernen und des einen oder der mehreren zweiten Caches, als Reaktion auf eine Bestimmung ausgeschaltet wird, dass Threads einer aktuellen Arbeitslast auf der ersten Mehrzahl von Kernen konsolidiert werden können.

5. Prozessorgehäuse nach Anspruch 4, wobei als Reaktion auf eine Anforderung für eine dritte Cache-Zeile, die von dem effizienten Kerncluster stammt, der das Snoop-Filter verfehlt, auf die dritte Cache-Zeile vom Speicher über den Speicher-Controller zugegriffen werden soll.

6. Prozessorgehäuse nach Anspruch 4, wobei die Verwaltungsschaltung (1031) bestimmen soll, dass die Threads der aktuellen Arbeitslast auf der ersten Mehrzahl von Kernen basierend auf Charakteristiken der Threads im Hinblick auf eine minimal erforderliche Leistungsmetrik konsolidiert werden können.

7. Prozessorgehäuse nach einem der Ansprüche 1 bis 6, das ferner Folgendes umfasst:
eine Vorrichtung (1010) mit einem oder mehreren kohärenten Caches;
wobei als Reaktion auf eine Anforderung für eine dritte Cache-Zeile, die von dem effizienten Kerncluster stammt, der auf das Snoop-Filter trifft, der Home-Agent mindestens einen des einen oder der mehreren kohärenten Caches snoopen soll, um Kohärenz der dritten Cache-Zeile sicherzustellen.

8. Prozessorgehäuse nach Anspruch 7, wobei die Vorrichtung einen Grafikprozessor oder eine neuronale Verarbeitungseinheit umfasst.

9. Prozessorgehäuse nach einem der Ansprüche 4 bis 8, wobei die Verwaltungsschaltung (1031) eine erste Verwaltungsschaltung umfasst, die integral mit dem ersten Die (1051) ist, wobei das Prozessorgehäuse ferner Folgendes umfasst:
einen Plattformsteuerungs-Die (1050) der Mehrzahl von Dies, wobei der Plattformsteuerungs-Die Folgendes umfasst:
eine Mehrzahl von Eingabe-Ausgabe-Schnittstellen (1041) zum Koppeln mit einer Mehrzahl von Eingabe-AusgabeVorrichtungen; und
eine zweite Verwaltungsschaltung (1030) zum Durchführen von gehäuseweiten Verwaltungsoperationen.

10. Prozessorgehäuse nach einem der Ansprüche 1 bis 9, das ferner Folgendes umfasst:
einen gehäuseinternen Speicher, der mit dem Speicher-Controller gekoppelt ist.

11. Verfahren, das Folgendes umfasst:
Ausführen (1061) von Threads einer aktuellen Arbeitslast auf einem effizienten Kerncluster (1012) und einem Leistungskerncluster (1014), wobei der effiziente Kerncluster Folgendes umfasst:
eine erste Mehrzahl von Kernen, die gemäß ersten Strom- und Leistungsmerkmalen betriebsfähig sind, und
einen oder mehrere erste Caches; und
wobei der Leistungskerncluster Folgendes umfasst:
eine zweite Mehrzahl von Kernen, die gemäß zweiten Strom- und Leistungsmerkmalen betreibbar sind, die sich von den ersten Strom- und Leistungsmerkmalen unterscheiden, und
einen oder mehrere zweite Caches;
Verfolgen von Zuständen von Cache-Zeilen durch ein Snoop-Filter eines Home-Agenten, wobei die Cache-Zeilen in dem einen oder den mehreren ersten Caches, aber nicht dem einen oder den mehreren zweiten Caches gespeichert sind;
Snooping (1064) mindestens eines des einen oder der mehreren ersten Caches durch den Home-Agenten als Reaktion auf eine Anforderung für eine erste Cache-Zeile, die von dem Leistungskerncluster stammt, der auf das Snoop-Filter trifft; und
Snooping (1067) mindestens eines des einen oder der mehreren zweiten Caches durch den Home-Agenten als Reaktion auf eine Anforderung für eine zweite Cache-Zeile, die von dem effizienten Kerncluster stammt, der das Snoop-Filter verfehlt.

12. Verfahren nach Anspruch 11, wobei als Reaktion auf eine Anforderung für eine dritte Cache-Zeile, die von dem Leistungskerncluster stammt, der das Snoop-Filter verfehlt, auf die dritte Cache-Zeile aus dem Speicher über einen Speicher-Controller zugegriffen werden soll (1063).

13. Verfahren nach Anspruch 11 oder 12, wobei als Reaktion auf eine Anforderung für eine vierte Cache-Zeile, die von dem effizienten Kerncluster stammt, der auf das Snoop-Filter trifft, der Home-Agent den einen oder die mehreren ersten Caches zu snoopen (1068) hat, um Kohärenz der vierten Cache-Zeile sicherzustellen.

14. Verfahren nach einem der Ansprüche 11 bis 13, das ferner Folgendes umfasst:
Bewirken (1069), dass der Leistungskerncluster, einschließlich der zweiten Mehrzahl von Kernen und des einen oder der mehreren zweiten Caches, als Reaktion auf eine Bestimmung ausgeschaltet wird, dass Threads einer aktuellen Arbeitslast auf der ersten Mehrzahl von Kernen konsolidiert werden können.

15. Maschinenlesbares Medium, auf dem ein Programmcode gespeichert ist, der bei Ausführung durch einen Prozessor bewirkt, dass der Prozessor das Verfahren nach einem der Ansprüche 11 bis 14 durchführt.

## Revendications

1. Boîtier de processeur comprenant :
une pluralité de dés comportant un premier dé et un deuxième dé, le premier dé (1051) comprenant :
une grappe de cœurs efficaces (1012) comprenant :
une première pluralité de cœurs (1015-1018) pouvant fonctionner selon des premières caractéristiques de puissance et de performance, et
une première une ou plusieurs mémoires caches (1019) ;
une grappe de cœurs de performance (1014) comprenant :
une deuxième pluralité de cœurs (1025-1028) pouvant fonctionner selon des deuxièmes caractéristiques de puissance et de performance différentes des premières caractéristiques de puissance et de performance, et
une deuxième une ou plusieurs mémoires caches (1029) ;
un contrôleur de mémoire (1004) pour coupler la grappe de cœurs efficaces et la grappe de cœurs de performance à une mémoire (1002) ;
un agent local (1006) comportant un filtre de furetage (1007) pour suivre des états de lignes de mémoire cache stockées dans la première une ou plusieurs mémoires caches, mais pas dans la deuxième une ou plusieurs mémoires caches ;
en réponse à une demande pour une première ligne de mémoire cache provenant de la grappe de cœurs de performance qui donne une réussite dans le filtre de furetage, l'agent local devant fureter au moins une de la première une ou plusieurs mémoires caches pour assurer la cohérence de la première ligne de cache ; et
en réponse à une demande pour une deuxième ligne de mémoire cache provenant de la grappe de cœurs efficaces qui donne un défaut dans le filtre de furetage, l'agent local devant fureter au moins une de la deuxième une ou plusieurs mémoires caches pour assurer la cohérence de la deuxième ligne de mémoire cache.

2. Boîtier de processeur selon la revendication 1, en réponse à une demande pour une troisième ligne de mémoire cache provenant de la grappe de cœurs de performance donne un défaut dans le filtre de furetage, la troisième ligne de mémoire cache devant être accédée à partir de la mémoire via le contrôleur de mémoire.

3. Boîtier de processeur selon la revendication 1 ou 2, en réponse à une demande pour une quatrième ligne de mémoire cache provenant de la grappe de cœurs efficaces qui donne une réussite dans le filtre de furetage, l'agent local devant fureter la première une ou plusieurs mémoires caches pour assurer la cohérence de la quatrième ligne de mémoire cache.

4. Boîtier de processeur selon l'une quelconque des revendications 1 à 3, comprenant en outre :
une circuiterie de gestion (1031) intégrée à un ou plusieurs de la pluralité de dés pour entrainer la mise hors tension de la grappe de cœurs de performance, y compris la deuxième pluralité de cœurs et la deuxième une ou plusieurs mémoires caches, en réponse à une détermination que des processus légers d'une charge de travail actuelle peuvent être consolidés sur la première pluralité de cœurs.

5. Boîtier de processeur selon la revendication 4, en réponse à une demande pour une troisième ligne de mémoire cache provenant de la grappe de cœurs efficaces qui donne un défaut dans le filtre de furetage, la troisième ligne de mémoire cache devant être accédée à partir de la mémoire via le contrôleur de mémoire.

6. Boîtier de processeur selon la revendication 4, la circuiterie de gestion (1031) étant destinée à déterminer que les processus légers de la charge de travail actuelle peuvent être consolidés sur la première pluralité de cœurs sur la base de caractéristiques des processus légers en vue d'une métrique de performance requise minimale.

7. Boîtier de processeur selon l'une quelconque des revendications 1 à 6, comprenant en outre :
un dispositif (1010) avec une ou plusieurs mémoires caches cohérentes ;
en réponse à une demande pour une troisième ligne de mémoire cache provenant de la grappe de cœurs efficaces qui donne une réussite dans le filtre de furetage, l'agent local devant fureter au moins une de l'une ou plusieurs mémoires caches cohérentes pour assurer la cohérence de la troisième ligne de mémoire cache.

8. Boîtier de processeur selon la revendication 7, le dispositif comprenant un processeur graphique ou une unité de traitement neuronal.

9. Boîtier de processeur selon l'une quelconque des revendications 4 à 8, la circuiterie de gestion (1031) comprenant une première circuiterie de gestion intégrée au premier dé (1051), le boîtier de processeur comprenant en outre :
un dé de commande de plateforme (1050) parmi la pluralité de dés, le dé de commande de plateforme comprenant :
une pluralité d'interfaces d'entrée-sortie (1041) destinées à se coupler à une pluralité de dispositifs d'entrée-sortie ; et
une deuxième circuiterie de gestion (1030) pour réaliser des opérations de gestion à l'échelle du boîtier.

10. Boîtier de processeur selon l'une quelconque des revendications 1 à 9, comprenant en outre :
une mémoire intégrée au boîtier couplée au contrôleur de mémoire.

11. Procédé, comprenant :
l'exécution (1061) de processus légers d'une charge de travail actuelle sur une grappe de cœurs efficaces (1012) et une grappe de cœurs de performance (1014), la grappe de cœurs efficaces comprenant :
une première pluralité de cœurs pouvant fonctionner selon des premières caractéristiques de puissance et de performance, et
une première une ou plusieurs mémoires caches ; et
la grappe de cœurs de performance comprenant :
une deuxième pluralité de cœurs pouvant fonctionner selon une deuxième puissance et des caractéristiques de performance différentes des premières caractéristiques de puissance et de performance, et
une deuxième une ou plusieurs mémoires caches ;
le suivi d'états des lignes de mémoire cache par un filtre de furetage d'un agent local, les lignes de mémoire cache étant stockées dans la première une ou plusieurs mémoires caches mais pas dans la deuxième une ou plusieurs mémoires caches ;
le furetage (1064) d'au moins une des premières une ou plusieurs mémoires caches par l'agent local en réponse à une demande pour une première ligne de mémoire cache provenant de la grappe de cœurs de performance qui donne une réussite dans le filtre de furetage ; et
le furetage (1067) d'au moins une des deuxièmes une ou plusieurs mémoires caches par l'agent local en réponse à une demande pour une deuxième ligne de mémoire cache provenant de la grappe de cœurs efficaces qui donne un défaut dans le filtre de furetage.

12. Procédé selon la revendication 11, en réponse à une demande pour une troisième ligne de mémoire cache provenant de la grappe de cœurs de performance qui donne un défaut dans le filtre de furetage, la troisième ligne de mémoire cache devant être accédée (1063) à partir de la mémoire via un contrôleur de mémoire.

13. Procédé selon la revendication 11 ou 12, en réponse à une demande pour une quatrième ligne de mémoire cache provenant de la grappe de cœurs efficaces qui donne une réussite dans le filtre de furetage, l'agent local devant fureter (1068) la première une ou plusieurs mémoires caches pour assurer la cohérence de la quatrième ligne de mémoire cache.

14. Procédé selon l'une quelconque des revendications 11 à 13, comprenant en outre :
le fait (1069) de mettre hors tension la grappe de cœurs de performance, y compris la deuxième pluralité de cœurs et la deuxième une ou plusieurs mémoires caches, en réponse à une détermination que les processus légers d'une charge de travail actuelle peuvent être consolidés sur la première pluralité de cœurs.

15. Support lisible par machine sur lequel est stocké un code de programme qui, lorsqu'il est exécuté par un processeur, amène le processeur à réaliser le procédé selon l'une quelconque des revendications 11 à 14.
